(19) Europäisches Patentamt / European Patent Office / Office européen des brevets

(11) EP 4 589 945 A1

(12) **EUROPEAN PATENT APPLICATION**
published in accordance with Art. 153(4) EPC

(43) Date of publication:
23.07.2025 Bulletin 2025/30

(21) Application number: 23865930.4

(22) Date of filing: 18.09.2023

(51) International Patent Classification (IPC):
H04N 19/105 (2014.01)   H04N 19/593 (2014.01)
H04N 19/11 (2014.01)   H04N 19/176 (2014.01)
H04N 19/70 (2014.01)   H04N 19/61 (2014.01)
H04N 19/167 (2014.01)   H04N 19/625 (2014.01)
H04N 19/119 (2014.01)   H04N 19/96 (2014.01)

(52) Cooperative Patent Classification (CPC):
H04N 19/105; H04N 19/11; H04N 19/119;
H04N 19/167; H04N 19/176; H04N 19/593;
H04N 19/61; H04N 19/625; H04N 19/70;
H04N 19/96

(86) International application number:
PCT/KR2023/014063

(87) International publication number:
WO 2024/058637 (21.03.2024 Gazette 2024/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.09.2022  KR 20220117490
12.10.2022  KR 20220130980
14.10.2022  KR 20220132759
11.01.2023  KR 20230004031

(71) Applicant: Wilus Institute of Standards and
Technology Inc.
Gyeonggi-do 13595 (KR)

(72) Inventors:
• KIM, Dongcheol
Seongnam-si Gyeonggi-do 13595 (KR)
• KIM, Kyungyong
Seongnam-si Gyeonggi-do 13595 (KR)
• SON, Juhyung
Seongnam-si Gyeonggi-do 13595 (KR)
• KWAK, Jinsam
Seongnam-si Gyeonggi-do 13595 (KR)

(74) Representative: Schmitt-Nilson Schraud Waibel
Wohlfrom
Patentanwälte Partnerschaft mbB
Pelkovenstraße 143
80992 München (DE)

(54) **VIDEO SIGNAL PROCESSING METHOD AND DEVICE THEREFOR**

(57)  This processor of a video signal decoding device may: determine a first prediction mode of a current block, generate a prediction block of the current block on the basis of the first prediction mode, generate a residual block of the current block on the basis of a transform matrix set which is determined on the basis of a second prediction mode, and reconstruct the current block on the basis of the prediction block and the residual block.

[Fig. 41]

**EP 4 589 945 A1**

**Description**

**Technical Field**

The present disclosure relates to a video signal processing method and device and, more specifically, to a video signal processing method and device by which a video signal is encoded or decoded.

**Background Art**

Compression coding refers to a series of signal processing techniques for transmitting digitized information through a communication line or storing information in a form suitable for a storage medium. An object of compression encoding includes objects such as voice, video, and text, and in particular, a technique for performing compression encoding on an image is referred to as video compression. Compression coding for a video signal is performed by removing excess information in consideration of spatial correlation, temporal correlation, and stochastic correlation. However, with the recent development of various media and data transmission media, a more efficient video signal processing method and apparatus are required.

**Disclosure of Invention**

**Technical Problem**

An aspect of the present specification is to provide a video signal processing method and a device therefor to increase the coding efficiency of a video signal.

**Solution to Problem**

The disclosure provides a video signal processing method and a device therefor.

In the disclosure, a video signal decoding device may include a processor, and the processor may determine a transform kernel set for transformation of a current block to which intra template matching is applied and predict the current block based on a transform kernel included in the transform kernel set, and the transform kernel set may be determined based on an intra prediction mode related to the current block.

In the disclosure, a video signal encoding device may include a processor, and the processor may obtain a bitstream decoded by a decoding method, and the decoding method may include determining a transform kernel set for transformation of a current block to which intra template matching is applied; and predicting the current block based on a transform kernel included in the transform kernel set, and the transform kernel set may be determined based on an intra prediction mode related to the current block.

In the disclosure, in a computer-readable non-transitory storage medium that is configured to store a bitstream, the bitstream may be decoded by a decoding method, and the decoding method may include determining a transform kernel set for transformation of a current block to which intra template matching is applied; and predicting the current block based on a transform kernel included in the transform kernel set, and the transform kernel set may be determined based on an intra prediction mode related to the current block.

In addition, in the disclosure, the transform kernel set may be at least one of a set of transform matrices of a multiple transform set (MTS), a set of transform matrices of a low frequency non-separable transform (LFNST), and/or a set of transform matrices of a non-separable primary transform.

In addition, in the disclosure, the intra prediction mode may be derived based on decoder side intra mode derivation (DIMD).

In addition, in the disclosure, the intra prediction mode may be derived based on an intra prediction mode of a preconfigured location within a reference block of the current block and an intra prediction mode of a neighboring block of the reference block.

In addition, in the disclosure, the preconfigured locations within the reference block may be above-left, below-right, and center of the current block, and the neighboring block of the reference block may be a block adjacent to the center block among the blocks of the above boundary of the current block from among the neighboring blocks of the reference block adjacent to the above boundary of the reference block and a block adjacent to the center block among the blocks of the left boundary of the current block from among the neighboring blocks adjacent to the left boundary of the reference block.

In addition, in the disclosure, the intra prediction mode may be derived based on an intra prediction mode of a neighboring block of the current block.

In addition, in the disclosure, the neighboring blocks of the current block may be blocks located at (-1, H-1), (W-1, -1), (-1, H), (W, -1), (-1, 0), and the H may be the height of the current block, the W may be the width of the current block, and the location of above-left block of the current block may be (0, 0).

In addition, in the disclosure, when an intra prediction mode of a preconfigured location within the reference block of the current block and an intra prediction mode of the neighboring block of the reference block do not exist, the intra prediction mode may be derived based on decoder side intra mode derivation (DIMD).

**Advantageous Effects of Invention**

The present disclosure provides a method for efficiently processing a video signal.

The effects obtainable from the present specification are not limited to the effects mentioned above, and other effects not mentioned may be clearly understood by to those skilled in the art, to which the present disclosure belongs, from the description below.

**Brief Description of Drawings**

FIG. 1 is a schematic block diagram of a video signal encoding apparatus according to an embodiment of the present invention.

FIG. 2 is a schematic block diagram of a video signal decoding apparatus according to an embodiment of the present invention.

FIG. 3 shows an embodiment in which a coding tree unit is divided into coding units in a picture.

FIG. 4 shows an embodiment of a method for signaling a division of a quad tree and a multi-type tree.

FIGS. 5 and 6 illustrate an intra-prediction method in more detail according to an embodiment of the present disclosure.

FIG. 7 illustrates the position of neighboring blocks used to construct a motion candidate list in inter prediction.

FIG. 8 is a diagram illustrating a type of transform kernel according to an embodiment of the disclosure.

FIG. 9 is a diagram illustrating a $0^{th}$ (the lowest frequency component of the corresponding transform kernel) basis function of DCT-II, DCT-V, DCT-VIII, DST-I, and DST-VII transforms according to an embodiment of the disclosure.

FIGS. 10 and 11 are diagrams illustrating a transform kernel set according to an embodiment of the disclosure.

FIG. 12 is a diagram illustrating a process of reconstructing a residual signal according to an embodiment of the disclosure.

FIG. 13 is a diagram illustrating a region-of-interest (ROI) of a block to which secondary transform is applied according to an embodiment of the disclosure.

FIG. 14 is a diagram illustrating a method of applying a secondary transform (LFNST) according to an embodiment of the disclosure.

FIG. 15 is a diagram illustrating a mapping relationship between an intra prediction mode and a transform kernel set for secondary transform according to an embodiment of the disclosure.

FIG. 16 is a diagram illustrating a process of generating a prediction block by using DIMD according to an embodiment of the disclosure.

FIG. 17 is a diagram illustrating locations of surrounding pixels used to derive directional information according to an embodiment of the disclosure.

FIG. 18 is a diagram illustrating a method of mapping a directional mode according to an embodiment of the disclosure.

FIG. 19 is a diagram illustrating a histogram for deriving an intra prediction directional mode according to an embodiment of the disclosure.

FIGS. 20 to 22 illustrate matrix-based intra prediction according to an embodiment of the disclosure.

FIG. 23 is a diagram illustrating intra template matching according to an embodiment of the disclosure.

FIG. 24 is a diagram illustrating an encoding/decoding process of a signal related to a DIMD method according to an embodiment of the disclosure.

FIG. 25 is a diagram illustrating an encoding/decoding process of a signal related to an MIP and/or intra TMP method according to an embodiment of the disclosure.

FIG. 26 is a diagram illustrating a relationship between an input vector of a secondary transform and an intra prediction mode according to an embodiment of the disclosure.

FIG. 27 is a diagram illustrating a method of configuring an input vector of a secondary transform according to an embodiment of the disclosure.

FIG. 28 is a diagram illustrating a process of deriving directional information of a template of a current block for intra template matching according to an embodiment of the disclosure.

FIG. 29 is a diagram illustrating a template form for deriving intra prediction directional information according to an embodiment of the disclosure.

FIG. 30 is a diagram illustrating an MTS set applied to an intra template matching block according to an embodiment of the disclosure.

FIGS. 31 and 32 are diagrams illustrating a syntax structure including a flag indicating whether intra template matching is applied according to an embodiment of the disclosure.

FIG. 33 is a diagram illustrating a syntax structure showing a method of parsing a syntax element indicating whether LFNST is applied.

FIG. 34 is a diagram illustrating intra propagation of an intra template matching block according to an embodiment of the disclosure.

FIG. 35 is a diagram illustrating a method of applying a hash key according to a method of searching for an intra template matching block according to an embodiment of the disclosure.

FIG. 36 is a diagram illustrating a preconfigured location for searching for an intra template matching block according to an embodiment of the disclosure.

FIG. 37 is a diagram illustrating a coding unit syntax structure according to an embodiment of the disclosure.

FIG. 38 is a diagram illustrating a method of selecting a transform set for a block to which an intra TMP is applied according to an embodiment of the disclosure.

FIG. 39 is a diagram illustrating a plurality of block vectors for an intra TMP block according to an embodiment of the disclosure.

FIG. 40 is a diagram illustrating a method of deriving an intra prediction mode of a block to which an intra TMP is applied according to an embodiment of the disclosure.

FIG. 41 is a diagram illustrating a method for determining an MTS set or an LFNST set according to an embodiment of the disclosure.

## Mode for Carrying out the Invention

Terms used in this specification may be currently widely used general terms in consideration of functions in the present invention but may vary according to the intents of those skilled in the art, customs, or the advent of new technology. Additionally, in certain cases, there may be terms the applicant selects arbitrarily and in this case, their meanings are described in a corresponding description part of the present invention. Accordingly, terms used in this specification should be interpreted based on the substantial meanings of the terms and contents over the whole specification.

In this specification, 'A and/or B' may be interpreted as meaning 'including at least one of A or B.'

In this specification, some terms may be interpreted as follows. Coding may be interpreted as encoding or decoding in some cases. In the present specification, an apparatus for generating a video signal bitstream by performing encoding (coding) of a video signal is referred to as an encoding apparatus or an encoder, and an apparatus that performs decoding (decoding) of a video signal bitstream to reconstruct a video signal is referred to as a decoding apparatus or decoder. In addition, in this specification, the video signal processing apparatus is used as a term of a concept including both an encoder and a decoder. Information is a term including all values, parameters, coefficients, elements, etc. In some cases, the meaning is interpreted differently, so the present invention is not limited thereto. 'Unit' is used as a meaning to refer to a basic unit of image processing or a specific position of a picture, and refers to an image region including both a luma component and a chroma component. Furthermore, a "block" refers to a region of an image that includes a particular component of a luma component and chroma components (i.e., Cb and Cr). However, depending on the embodiment, the terms "unit", "block", "partition", "signal", and "region" may be used interchangeably. Also, in the present specification, the term "current block" refers to a block that is currently scheduled to be encoded, and the term "reference block" refers to a block that has already been encoded or decoded and is used as a reference in a current block. In addition, the terms "luma", "luminance", "Y", and the like may be used interchangeably in this specification. Additionally, in the present specification, the terms "chroma", "chrominance", "Cb or Cr", and the like may be used interchangeably, and chroma components are classified into two components, Cb and Cr, and thus each chroma component may be distinguished and used. Additionally, in the present specification, the term "unit" may be used as a concept that includes a coding unit, a prediction unit, and a transform unit. A "picture" refers to a field or a frame, and depending on embodiments, the terms may be used interchangeably. Specifically, when a captured video is an interlaced video, a single frame may be separated into an odd (or cardinal or top) field and an even (or even-numbered or bottom) field, and each field may be configured in one picture unit and encoded or decoded. If the captured video is a progressive video, a single frame may be configured as a picture and encoded or decoded. In addition, in the present specification, the terms "error signal", "residual signal", "residue signal", "remaining signal", and "difference signal" may be used interchangeably. Also, in the present specification, the terms "intra-prediction mode", "intra-prediction directional mode", "intra-picture prediction mode", and "intra-picture prediction directional mode" may be used interchangeably. In addition, in the present specification, the terms "motion", "movement", and the like may be used interchangeably. Also, in the present specification, the terms "left", "left above", "above", "right above", "right", "right below", "below", and "left below" may be used interchangeably with "leftmost", "top left", "top", "top right", "right", "bottom right", "bottom", and "bottom left". Also, the terms "element" and "member" may be used interchangeably. Picture order count (POC) represents temporal position information of pictures (or frames), and may be the playback order in which displaying is performed on a screen, and each picture may have unique POC.

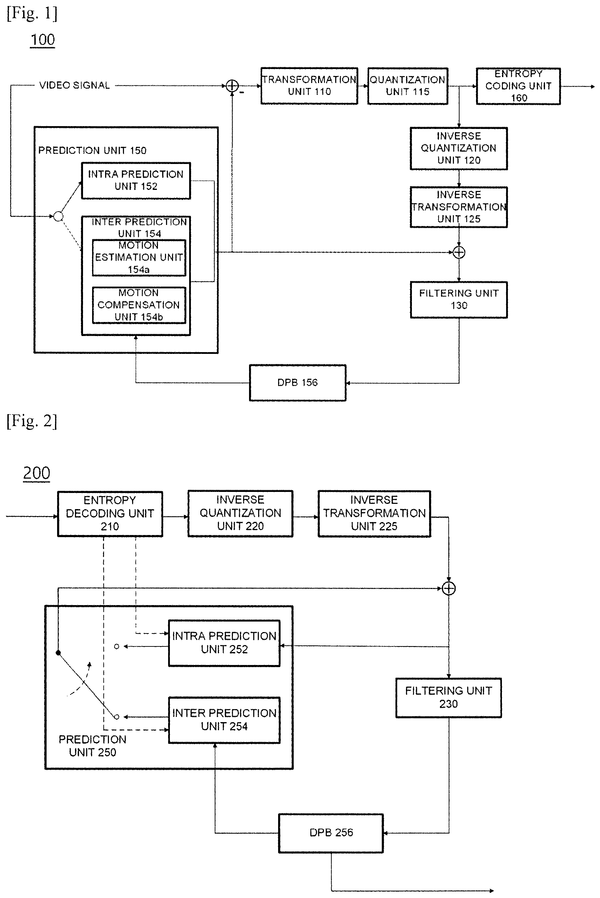

FIG. 1 is a schematic block diagram of a video signal encoding apparatus according to an embodiment of the present invention. Referring to FIG. 1, the encoding apparatus 100 of the present invention includes a transformation unit 110, a quantization unit 115, an inverse quantization unit 120, an inverse transformation unit 125, a filtering unit 130, a prediction unit 150, and an entropy coding unit 160.

The transformation unit 110 obtains a value of a transform coefficient by transforming a residual signal, which is a difference between the inputted video signal and the predicted signal generated by the prediction unit 150. For example, a Discrete Cosine Transform (DCT), a Discrete Sine Transform (DST), or a Wavelet Transform can be used. The DCT and DST perform transformation by splitting the input picture signal into blocks. In the transformation, coding efficiency may vary according to the distribution and characteristics of values in the transformation region. A transform kernel used for the transform of a residual block may has characteristics that allow a vertical transform and a horizontal transform to be separable. In this case, the transform of the residual block may be performed separately as a vertical transform and a horizontal transform. For example, an encoder may perform a vertical transform by applying a transform kernel in the vertical direction of a residual block. In addition, the encoder may perform a horizontal transform by applying the transform kernel in the horizontal direction of the residual block. In the present disclosure, the transform kernel may be used to refer to a set of parameters used for the transform of a residual signal, such as a transform matrix, a transform array, a transform function, or transform. For example, a transform kernel may be any one of multiple available kernels. Also, transform kernels based on different transform types may be used for the vertical transform and the horizontal transform, respectively.

The transform coefficients are distributed with higher coefficients toward the top left of a block and coefficients closer to "0" toward the bottom right of the block. As the size of a current block increases, there are likely to be many coefficients of "0" in the bottom-right region of the block. To reduce the transform complexity of a large-sized block, only a random top-left region may be kept and the remaining region may be reset to "0".

In addition, error signals may be present in only some regions of a coding block. In this case, the transform process may be performed on only some random regions. In an embodiment, in a block having a size of 2Nx2N, an error signal may be present only in the first 2NxN block, and the transform process may be performed on the first 2NxN block. However, the second 2NxN block may not be transformed and may not be encoded or decoded. Here, N may be any positive integer.

The encoder may perform an additional transform before transform coefficients are quantized. The above-described transform method may be referred to as a primary transform, and the additional transform may be referred to as a secondary transform. The secondary transform may be selective for each residual block. According to an embodiment, the encoder may improve coding efficiency by performing a secondary transform for regions where it is difficult to focus energy in a low-frequency region by using a primary transform alone. For example, a secondary transform may be additionally performed for blocks where residual values appear large in directions other than the horizontal or vertical direction of a residual block. Unlike a primary transform, a secondary transform may not be performed separately as a vertical transform and a horizontal transform. Such a secondary transform may be referred to as a low frequency non-separable transform (LFNST).

The quantization unit 115 quantizes the value of the transform coefficient value outputted from the transformation unit 110.

In order to improve coding efficiency, instead of coding the picture signal as it is, a method of predicting a picture using a region already coded through the prediction unit 150 and obtaining a reconstructed picture by adding a residual value between the original picture and the predicted picture to the predicted picture is used. In order to prevent mismatches in the encoder and decoder, information that can be used in the decoder should be used when performing prediction in the encoder. For this, the encoder performs a process of reconstructing the encoded current block again. The inverse quantization unit 120 inverse-quantizes the value of the transform coefficient, and the inverse transformation unit 125 reconstructs the residual value using the inverse quantized transform coefficient value. Meanwhile, the filtering unit 130 performs filtering operations to improve the quality of the reconstructed picture and to improve the coding efficiency. For example, a deblocking filter, a sample adaptive offset (SAO), and an adaptive loop filter may be included. The filtered picture is outputted or stored in a decoded picture buffer (DPB) 156 for use as a reference picture.

The deblocking filter is a filter for removing intra-block distortions generated at the boundaries between blocks in a reconstructed picture. Through the distribution of pixels included in several columns or rows based on random edges in a block, the encoder may determine whether to apply a deblocking filter to the edges. When applying a deblocking filter to the block, the encoder may apply a long filter, a strong filter, or a weak filter depending on the strength of deblocking filtering. Additionally, horizontal filtering and vertical filtering may be processed in parallel. The sample adaptive offset (SAO) may be used to correct offsets from an original video on a pixel-by-pixel basis with respect to a residual block to which a deblocking filter has been applied. To correct offset for a particular picture, the encoder may use a technique that divides pixels included in the picture into a predetermined number of regions, determines a region in which the offset correction is to be performed, and applies the offset to the region (Band Offset). Alternatively, the encoder may use a method for applying an offset in consideration of edge information of each pixel (Edge Offset). The adaptive loop filter (ALF) is a technique of dividing pixels included in a video into predetermined groups and then determining one filter to be applied to each group, thereby performing filtering differently for each group. Information about whether to apply ALF may be signaled on a per-coding unit basis, and the shape and filter coefficients of an ALF to be applied may vary for each block. In addition, an ALF filter having the same shape (a fixed shape) may be applied regardless of the characteristics of a target block to which the ALF filter is to be applied.

The prediction unit 150 includes an intra-prediction unit 152 and an inter-prediction unit 154. The intra-prediction unit 152 performs intra prediction within a current picture, and the inter-prediction unit 154 performs inter prediction to predict the current picture by using a reference picture stored in the decoded picture buffer 156. The intra-prediction unit 152 performs intra prediction from reconstructed regions in the current picture and transmits intra encoding information to the entropy coding unit 160. The intra encoding information may include at least one of an intra-prediction mode, a most probable mode (MPM) flag, an MPM index, and information regarding a reference sample. The inter-prediction unit 154 may again include a motion estimation unit 154a and a motion compensation unit 154b. The motion estimation unit 154a finds a part most similar to a current region with reference to a specific region of a reconstructed reference picture, and obtains a motion vector value which is the distance between the regions. Reference region-related motion information (reference direction indication information (L0 prediction, L1 prediction, or bidirectional prediction), a reference picture index, motion vector information, etc.) and the like, obtained by the motion estimation unit 154a, are transmitted to the entropy coding unit 160 so as to be included in a bitstream. The motion compensation unit 154B performs inter-motion compensation by using the motion information transmitted by the motion estimation unit 154a, to generate a prediction block for the current block. The inter-prediction unit 154 transmits the inter encoding information, which includes motion information related to the reference region, to the entropy coding unit 160.

According to an additional embodiment, the prediction unit 150 may include an intra block copy (IBC) prediction unit (not shown). The IBC prediction unit performs IBC prediction from reconstructed samples in a current picture and transmits IBC encoding information to the entropy coding unit 160. The IBC prediction unit references a specific region within a current picture to obtain a block vector value that indicates a reference region used to predict a current region. The IBC prediction unit may perform IBC prediction by using the obtained block vector value. The IBC prediction unit transmits the IBC encoding information to the entropy coding unit 160. The IBC encoding information may include at least one of reference region size information and block vector information (index information for predicting the block vector of a current block in a motion candidate list, and block vector difference information).

When the above picture prediction is performed, the transform unit 110 transforms a residual value between an original picture and a predictive picture to obtain a transform coefficient value. At this time, the transform may be performed on a specific block basis in the picture, and the size of the specific block may vary within a predetermined range. The quantization unit 115 quantizes the transform coefficient value generated by the transform unit 110 and transmits the quantized transform coefficient to the entropy coding unit 160.

The quantized transform coefficients in the form of a two-dimensional array may be rearranged into a one-dimensional array for entropy coding. In relation to methods for scanning a quantized transform coefficient, the size of a transform block and an intra-picture prediction mode may determine which scanning method is used. In an embodiment, diagonal, vertical, and horizontal scans may be applied. This scan information may be signaled on a block-by-block basis, and may be derived based on predetermined rules.

The entropy coding unit 160 generates a video signal bitstream by entropy coding information indicating a quantized transform coefficient, intra encoding information, and inter encoding information. The entropy coding unit 160 may use variable length coding (VLC) and arithmetic coding. The variable length coding (VLC) is a technique of transforming input symbols into consecutive codewords, wherein the length of the codewords is variable. For example, frequently occurring symbols are represented by shorter codewords, while less frequently occurring symbols are represented by longer codewords. As the variable length coding, context-based adaptive variable length coding (CAVLC) may be used. The arithmetic coding uses the probability distribution of each data symbol to transform consecutive data symbols into a single decimal number. The arithmetic coding allows acquisition of the optimal decimal bits needed to represent each symbol. As the arithmetic coding, context-based adaptive binary arithmetic coding (CABAC) may be used.

CABAC is a binary arithmetic coding technique using multiple context models generated based on probabilities obtained from experiments. First, when symbols are not in binary form, the encoder binarizes each symbol by using exp-Golomb, etc. The binarized value, 0 or 1, may be described as a bin. A CABAC initialization process is divided into context initialization and arithmetic coding initialization. The context initialization is the process of initializing the probability of occurrence of each symbol, and is determined by the type of symbol, a quantization parameter (QP), and slice type (I, P, or B). A context model having the initialization information may use a probability-based value obtained through an experiment. The context model provides information about the probability of occurrence of Least Probable Symbol (LPS) or Most Probable Symbol (MPS) for a symbol to be currently coded and about which of bin values 0 and 1 corresponds to the MPS (valMPS). One of multiple context models is selected via a context index (ctxIdx), and the context index may be derived from information in a current block to be encoded or from information about neighboring blocks. Initialization for binary arithmetic coding is performed based on a probability model selected from the context models. In the binary arithmetic coding, encoding is performed through the process in which division into probability intervals is made through the probability of occurrence of 0 and 1, and then a probability interval corresponding to a bin to be processed becomes the entire probability interval for the next bin to be processed. Information about a position within the last bin in which the last bin has been processed is output. However, the probability interval cannot be divided indefinitely, and thus, when the probability interval is reduced to a certain size, a renormalization process is performed to widen the probability interval and the corresponding position information is output. In addition, after each bin is processed, a probability update process may be performed, wherein information about a processed bin is used to set a new probability for the next to be processed.

The generated bitstream is encapsulated in network abstraction layer (NAL) unit as basic units. The NAL units are classified into video a coding layer (VCL) NAL unit, which includes video data, and a non-VCL NAL unit, which includes parameter information for decoding video data. There are various types of VCL or non-VCL NAL units. A NAL unit includes NAL header information and raw byte sequence payload (RBSP) which is data. The NAL header information includes summary information about the RBSP. The RBSP of a VCL NAL unit includes an integer number of encoded coding tree units. In order to decode a bitstream in a video decoder, it is necessary to separate the bitstream into NAL units and then decode each of the separate NAL units. Information required for decoding a video signal bitstream may be included in a picture parameter set (PPS), a sequence parameter set (SPS), a video parameter set (VPS), etc., and transmitted.

The block diagram of FIG. 1 illustrates the encoding device 100 according to an embodiment of the present disclosure, wherein the separately shown blocks logically distinguish the elements of the encoding device 100. Accordingly, the above-described elements of the encoding device 100 may be mounted as a single chip or multiple chips, depending on the design of the device. According to an embodiment, the above-described operation of each element of the encoding device 100 may be performed by a processor (not shown).

FIG. 2 is a schematic block diagram of a video signal decoding apparatus 200 according to an embodiment of the present invention. Referring to FIG. 2, the decoding apparatus 200 of the present invention includes an entropy decoding unit 210, an inverse quantization unit 220, an inverse transformation unit 225, a filtering unit 230, and a prediction unit 250.

The entropy decoding unit 210 entropy-decodes a video signal bitstream to extract transform coefficient information, intra encoding information, inter encoding information, and the like for each region. For example, the entropy decoding unit 210 may obtain a binarization code for transform coefficient information of a specific region from the video signal bitstream. The entropy decoding unit 210 obtains a quantized transform coefficient by inverse-binarizing a binary code. The inverse quantization unit 220 inverse-quantizes the quantized transform coefficient, and the inverse transformation unit 225 reconstructs a residual value by using the inverse-quantized transform coefficient. The video signal processing device 200 reconstructs an original pixel value by summing the residual value obtained by the inverse transformation unit 225 with a prediction value obtained by the prediction unit 250.

Meanwhile, the filtering unit 230 performs filtering on a picture to improve image quality. This may include a deblocking filter for reducing block distortion and/or an adaptive loop filter for removing distortion of the entire picture. The filtered picture is outputted or stored in the DPB 256 for use as a reference picture for the next picture.

The prediction unit 250 includes an intra prediction unit 252 and an inter prediction unit 254. The prediction unit 250 generates a prediction picture by using the encoding type decoded through the entropy decoding unit 210 described above, transform coefficients for each region, and intra/inter encoding information. In order to reconstruct a current block in which decoding is performed, a decoded region of the current picture or other pictures including the current block may be used. In a reconstruction, only a current picture, that is, a picture (or, tile/slice) that performs intra prediction or intra BC prediction, is called an intra picture or an I picture (or, tile/slice), and a picture (or, tile/slice) that can perform all of intra prediction, inter prediction, and intra BC prediction is called an inter picture (or, tile/slice). In order to predict sample values of each block among inter pictures (or, tiles/slices), a picture (or, tile/slice) using up to one motion vector and a reference picture index is called a predictive picture or P picture (or, tile/slice), and a picture (or tile/slice) using up to two motion vectors and a reference picture index is called a bi-predictive picture or a B picture (or tile / slice). In other words, the P picture (or, tile/slice) uses up to one motion information set to predict each block, and the B picture (or, tile/slice) uses up to two motion information sets to predict each block. Here, the motion information set includes one or more motion vectors and one reference picture index.

The intra prediction unit 252 generates a prediction block using the intra encoding information and reconstructed samples in the current picture. As described above, the intra encoding information may include at least one of an intra prediction mode, a Most Probable Mode (MPM) flag, and an MPM index. The intra prediction unit 252 predicts the sample values of the current block by using the reconstructed samples located on the left and/or upper side of the current block as reference samples. In this disclosure, reconstructed samples, reference samples, and samples of the current block may represent pixels. Also, sample values may represent pixel values.

According to an embodiment, the reference samples may be samples included in a neighboring block of the current block. For example, the reference samples may be samples adjacent to a left boundary of the current block and/or samples may be samples adjacent to an upper boundary. Also, the reference samples may be samples located on a line within a predetermined distance from the left boundary of the current block and/or samples located on a line within a predetermined distance from the upper boundary of the current block among the samples of neighboring blocks of the current block. In this case, the neighboring block of the current block may include the left (L) block, the upper (A) block, the below left (BL) block, the above right (AR) block, or the above left (AL) block.

The inter prediction unit 254 generates a prediction block using reference pictures and inter encoding information stored in the DPB 256. The inter coding information may include motion information set (reference picture index, motion vector information, etc.) of the current block for the reference block. Inter prediction may include L0 prediction, L1 prediction, and bi-prediction. L0 prediction means prediction using one reference picture included in the L0 picture list, and L1 prediction means prediction using one reference picture included in the L1 picture list. For this, one set of motion information (e.g., motion vector and reference picture index) may be required. In the bi-prediction method, up to two reference regions may be used, and the two reference regions may exist in the same reference picture or may exist in different pictures. That is, in the bi-prediction method, up to two sets of motion information (e.g., a motion vector and a reference picture index) may be used and two motion vectors may correspond to the same reference picture index or different reference picture indexes. In this case, the reference pictures are pictures located temporally before or after the current picture, and may be pictures for which reconstruction has already been completed. According to an embodiment, two reference regions used in the bi-prediction scheme may be regions selected from picture list L0 and picture list L1, respectively.

The inter prediction unit 254 may obtain a reference block of the current block using a motion vector and a reference picture index. The reference block is in a reference picture corresponding to a reference picture index. Also, a sample value of a block specified by a motion vector or an interpolated value thereof can be used as a predictor of the current block. For motion prediction with sub-pel unit pixel accuracy, for example, an 8-tap interpolation filter for a luma signal and a 4-tap interpolation filter for a chroma signal can be used. However, the interpolation filter for motion prediction in sub-pel units is not limited thereto. In this way, the inter prediction unit 254 performs motion compensation to predict the texture of the current unit from motion pictures reconstructed previously. In this case, the inter prediction unit may use a motion information set.

According to an additional embodiment, the prediction unit 250 may include an IBC prediction unit (not shown). The IBC prediction unit may reconstruct the current region by referring to a specific region including reconstructed samples in the current picture. The IBC prediction unit obtains IBC encoding information for the current region from the entropy decoding unit 210. The IBC prediction unit obtains a block vector value of the current region indicating the specific region in the current picture. The IBC prediction unit may perform IBC prediction by using the obtained block vector value. The IBC encoding information may include block vector information.

The reconstructed video picture is generated by adding the predict value outputted from the intra prediction unit 252 or the inter prediction unit 254 and the residual value outputted from the inverse transformation unit 225. That is, the video signal decoding apparatus 200 reconstructs the current block using the prediction block generated by the prediction unit 250 and the residual obtained from the inverse transformation unit 225.

Meanwhile, the block diagram of FIG. 2 shows a decoding apparatus 200 according to an embodiment of the present invention, and separately displayed blocks logically distinguish and show the elements of the decoding apparatus 200. Accordingly, the elements of the above-described decoding apparatus 200 may be mounted as one chip or as a plurality of chips depending on the design of the device. According to an embodiment, the operation of each element of the above-described decoding apparatus 200 may be performed by a processor (not shown).

The technology proposed in the present specification may be applied to a method and a device for both an encoder and a decoder, and the wording signaling and parsing may be for convenience of description. In general, signaling may be described as encoding each type of syntax from the perspective of the encoder, and parsing may be described as interpreting each type of syntax from the perspective of the decoder. In other words, each type of syntax may be included in a bitstream and signaled by the encoder, and the decoder may parse the syntax and use the syntax in a reconstruction process. In this case, the sequence of bits for each type of syntax arranged according to a prescribed hierarchical configuration may be called a bitstream.

One picture may be partitioned into sub-pictures, slices, tiles, etc. and encoded. A sub-picture may include one or more slices or tiles. When one picture is partitioned into multiple slices or tiles and encoded, all the slices or tiles within the picture must be decoded before the picture can be output a screen. On the other hand, when one picture is encoded into multiple subpictures, only a random subpicture may be decoded and output on the screen. A slice may include multiple tiles or subpictures. Alternatively, a tile may include multiple subpictures or slices. Subpictures, slices, and tiles may be encoded or decoded independently of each other, and thus are advantageous for parallel processing and processing speed improvement. However, there is the disadvantage in that a bit rate increases because encoded information of other adjacent subpictures, slices, and tiles is not available. A subpicture, a slice, and a tile may be partitioned into multiple coding tree units (CTUs) and encoded.

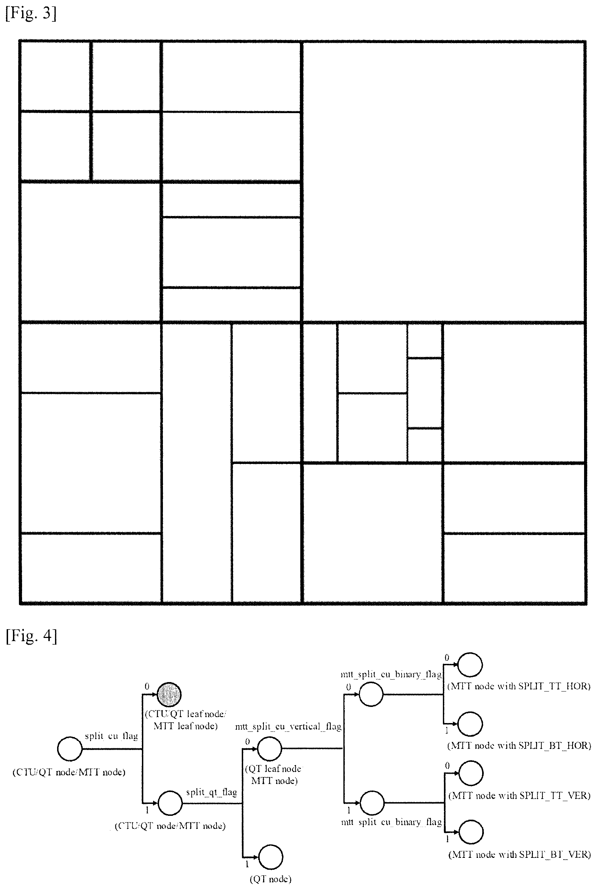

FIG. 3 illustrates an embodiment in which a coding tree unit (CTU) is divided into coding units (CUs) within a picture. In the process of coding a video signal, a picture may be divided into a sequence of coding tree units (CTUs). A coding tree unit may include a luma Coding Tree Block (CTB), two chroma coding tree blocks, and encoded syntax information thereof. One coding tree unit may include one coding unit, or one coding tree unit may be divided into multiple coding units. One coding unit may include a luma coding block (CB), two chroma coding blocks, and encoded syntax information thereof. One coding block may be partitioned into multiple sub-coding blocks. One coding unit may include one transform unit (TU), or one coding unit may be partitioned into multiple transform units. A transform unit may include a luma transform block (TB), two chroma transform blocks, and encoded syntax information thereof. A coding tree unit may be partitioned into multiple coding units. A coding tree unit may become a leaf node without being partitioned. In this case, the coding tree unit itself may be a coding unit.

The coding unit refers to a basic unit for processing a picture in the process of processing the video signal described above, that is, intra/inter prediction, transformation, quantization, and/or entropy coding. The size and shape of the coding unit in one picture may not be constant. The coding unit may have a square or rectangular shape. The rectangular coding unit (or rectangular block) includes a vertical coding unit (or vertical block) and a horizontal coding unit (or horizontal block). In the present specification, the vertical block is a block whose height is greater than the width, and the horizontal block is a block whose width is greater than the height. Further, in this specification, a non-square block may refer to a rectangular block, but the present invention is not limited thereto.

Referring to FIG. 3, the coding tree unit is first split into a quad tree (QT) structure. That is, one node having a 2NX2N size in a quad tree structure may be split into four nodes having an NXN size. In the present specification, the quad tree may also be referred to as a quaternary tree. Quad tree split can be performed recursively, and not all nodes need to be split with the same depth.

Meanwhile, the leaf node of the above-described quad tree may be further split into a multi-type tree (MTT) structure. According to an embodiment of the present invention, in a multi-type tree structure, one node may be split into a binary or ternary tree structure of horizontal or vertical division. That is, in the multi-type tree structure, there are four split structures such as vertical binary split, horizontal binary split, vertical ternary split, and horizontal ternary split. According to an embodiment of the present invention, in each of the tree structures, the width and height of the nodes may all have powers of 2. For example, in a binary tree (BT) structure, a node of a 2NX2N size may be split into two NX2N nodes by vertical binary split, and split into two 2NXN nodes by horizontal binary split. In addition, in a ternary tree (TT) structure, a node of a 2NX2N size is split into (N/2)X2N, NX2N, and (N/2)X2N nodes by vertical ternary split, and split into 2NX(N/2), 2NXN, and 2NX(N/2) nodes by horizontal ternary split. This multi-type tree split can be performed recursively.

A leaf node of the multi-type tree can be a coding unit. When the coding unit is not greater than the maximum transform length, the coding unit can be used as a unit of prediction and/or transform without further splitting. As an embodiment, when the width or height of the current coding unit is greater than the maximum transform length, the current coding unit can be split into a plurality of transform units without explicit signaling regarding splitting. On the other hand, at least one of the following parameters in the above-described quad tree and multi-type tree may be predefined or transmitted through a higher level set of RBSPs such as PPS, SPS, VPS, and the like. 1) CTU size: root node size of quad tree, 2) minimum QT size MinQtSize: minimum allowed QT leaf node size, 3) maximum BT size MaxBtSize: maximum allowed BT root node size, 4) Maximum TT size MaxTtSize: maximum allowed TT root node size, 5) Maximum MTT depth MaxMttDepth: maximum allowed depth of MTT split from QT's leaf node, 6) Minimum BT size MinBtSize: minimum allowed BT leaf node size, 7) Minimum TT size MinTtSize: minimum allowed TT leaf node size.

FIG. 4 illustrates an embodiment of a method of signaling splitting of the quad tree and multi-type tree. Preset flags can be used to signal the splitting of the quad tree and multi-type tree described above. Referring to FIG. 4, at least one of a flag "split_cu_flag' indicating whether or not to split a node, a flag 'split_qt_flag' indicating whether or not to split a quad tree node, a flag 'mtt_split_cu_vertical_flag' indicating a splitting direction of the multi-type tree node, or a flag 'mtt_split_cu_binary_flag' indicating a splitting shape of the multi-type tree node can be used.

According to an embodiment of the present invention, 'split_cu_flag', which is a flag indicating whether or not to split the current node, can be signaled first. When the value of 'split_cu_flag' is 0, it indicates that the current node is not split, and the current node becomes a coding unit. When the current node is the coating tree unit, the coding tree unit includes one unsplit coding unit. When the current node is a quad tree node 'QT node', the current node is a leaf node 'QT leaf node' of the quad tree and becomes the coding unit. When the current node is a multi-type tree node 'MTT node', the current node is a leaf node 'MTT leaf node' of the multi-type tree and becomes the coding unit.

When the value of 'split_cu_flag' is 1, the current node can be split into nodes of the quad tree or multi-type tree according to the value of 'split_qt_flag'. A coding tree unit is a root node of the quad tree, and can be split into a quad tree structure first. In the quad tree structure, 'split_qt_flag' is signaled for each node 'QT node'. When the value of 'split_qt_flag' is 1, the corresponding node is split into 4 square nodes, and when the value of 'qt_split_flag' is 0, the corresponding node becomes the 'QT leaf node' of the quad tree, and the corresponding node is split into multi-type nodes. According to an embodiment of the present invention, quad tree splitting can be limited according to the type of the current node. Quad tree splitting can be allowed when the current node is the coding tree unit (root node of the quad tree) or the quad tree node, and quad tree splitting may not be allowed when the current node is the multi-type tree node. Each quad tree leaf node 'QT leaf node' can be further split into a multi-type tree structure. As described above, when 'split_qt_flag' is 0, the current node can be split into multi-type nodes. In order to indicate the splitting direction and the splitting shape, 'mtt_split_cu_vertical_flag' and 'mtt_split_cu_binary_flag' can be signaled. When the value of 'mtt_split_cu_vertical_flag' is 1, vertical splitting of the node 'MTT node' is indicated, and when the value of 'mtt_split_cu_vertical_flag' is 0, horizontal splitting of the node 'MTT node' is indicated. In addition, when the value of 'mtt_split_cu_binary_flag' is 1, the node 'MTT node' is split into two rectangular nodes, and when the value of 'mtt_split_cu_binary_flag' is 0, the node 'MTT node' is split into three rectangular nodes.

In the tree partitioning structure, a luma block and a chroma block may be partitioned in the same form. That is, a chroma block may be partitioned by referring to the partitioning form of a luma block. When a current chroma block is less than a predetermined size, a chroma block may not be partitioned even if a luma block is partitioned.

In the tree partitioning structure, a luma block and a chroma block may have different forms. In this case, luma block partitioning information and chroma block partitioning information may be signaled separately. Furthermore, in addition to the partitioning information, luma block encoding information and chroma block encoding information may also be different from each other. In one example, the luma block and the chroma block may be different in at least one among intra encoding mode, encoding information for motion information, etc.

A node to be split into the smallest units may be treated as one coding block. When a current block is a coding block, the coding block may be partitioned into several sub-blocks (sub-coding blocks), and the sub-blocks may have the same prediction information or different pieces of prediction information. In one example, when a coding unit is in an intra mode, intra-prediction modes of sub-blocks may be the same or different from each other. Also, when the coding unit is in an inter mode, sub-blocks may have the same motion information or different pieces of the motion information. Furthermore, the sub-blocks may be encoded or decoded independently of each other. Each sub-block may be distinguished by a sub-block index (sbIdx). Also, when a coding unit is partitioned into sub-blocks, the coding unit may be partitioned horizontally, vertically, or diagonally. In an intra mode, a mode in which a current coding unit is partitioned into two or four sub-blocks horizontally or vertically is called intra sub-partitions (ISP). In an inter mode, a mode in which a current coding block is partitioned diagonally is called a geometric partitioning mode (GPM). In the GPM mode, the position and direction of a diagonal line are derived using a predetermined angle table, and index information of the angle table is signaled.

Picture prediction (motion compensation) for coding is performed on a coding unit that is no longer divided (i.e., a leaf node of a coding unit tree). Hereinafter, the basic unit for performing the prediction will be referred to as a "prediction unit" or a "prediction block".

Hereinafter, the term "unit" used herein may replace the prediction unit, which is a basic unit for performing prediction. However, the present disclosure is not limited thereto, and "unit" may be understood as a concept broadly encompassing the coding unit.

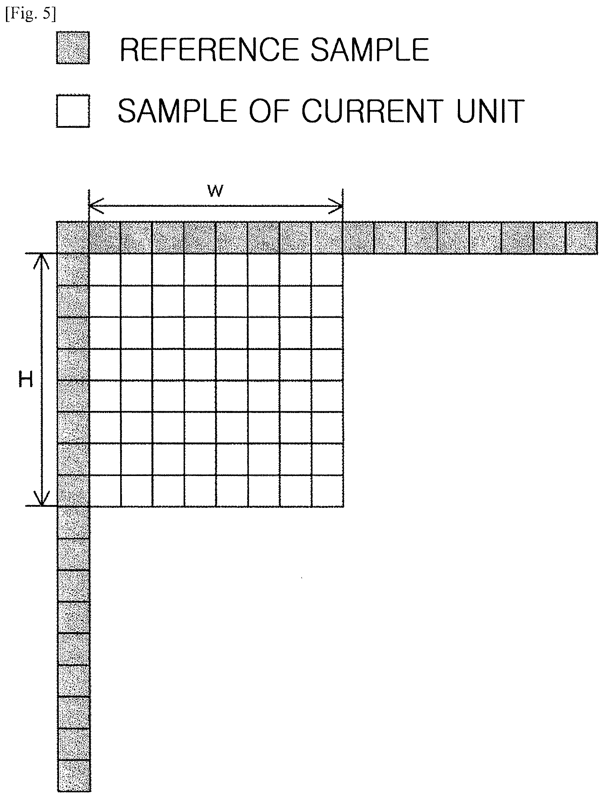

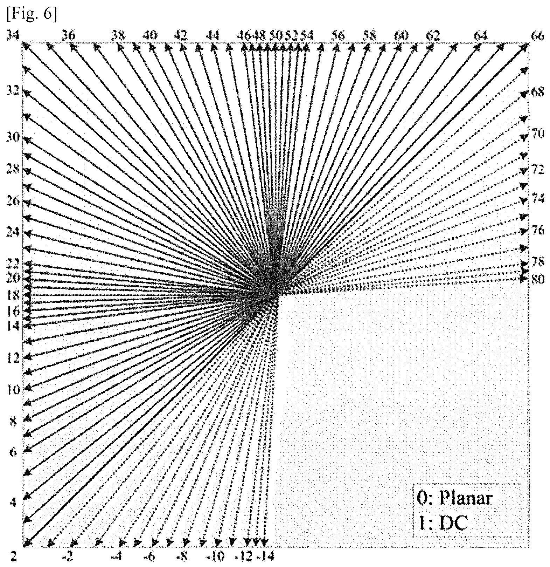

FIGS. 5 and 6 more specifically illustrate an intra prediction method according to an embodiment of the present invention. As described above, the intra prediction unit predicts the sample values of the current block by using the reconstructed samples located on the left and/or upper side of the current block as reference samples.

First, FIG. 5 shows an embodiment of reference samples used for prediction of a current block in an intra prediction mode. According to an embodiment, the reference samples may be samples adjacent to the left boundary of the current block and/or samples adjacent to the upper boundary. As shown in FIG. 5, when the size of the current block is WXH and samples of a single reference line adjacent to the current block are used for intra prediction, reference samples may be configured using a maximum of 2W+2H+1 neighboring samples located on the left and/or upper side of the current block.

Pixels from multiple reference lines may be used for intra prediction of the current block. The multiple reference lines may include n lines located within a predetermined range from the current block. According to an embodiment, when pixels from multiple reference lines are used for intra prediction, separate index information that indicates lines to be set as reference pixels may be signaled, and may be named a reference line index.

When at least some samples to be used as reference samples have not yet been reconstructed, the intra prediction unit may obtain reference samples by performing a reference sample padding procedure. The intra prediction unit may perform a reference sample filtering procedure to reduce an error in intra prediction. That is, filtering may be performed on neighboring samples and/or reference samples obtained by the reference sample padding procedure, so as to obtain the filtered reference samples. The intra prediction unit predicts samples of the current block by using the reference samples obtained as in the above. The intra prediction unit predicts samples of the current block by using unfiltered reference samples or filtered reference samples. In the present disclosure, neighboring samples may include samples on at least one reference line. For example, the neighboring samples may include adjacent samples on a line adjacent to the boundary of the current block.

Next, FIG. 6 shows an embodiment of prediction modes used for intra prediction. For intra prediction, intra prediction mode information indicating an intra prediction direction may be signaled. The intra prediction mode information indicates one of a plurality of intra prediction modes included in the intra prediction mode set. When the current block is an intra prediction block, the decoder receives intra prediction mode information of the current block from the bitstream. The intra prediction unit of the decoder performs intra prediction on the current block based on the extracted intra prediction mode information.

According to an embodiment of the present invention, the intra prediction mode set may include all intra prediction modes used in intra prediction (e.g., a total of 67 intra prediction modes). More specifically, the intra prediction mode set may include a planar mode, a DC mode, and a plurality (e.g., 65) of angle modes (i.e., directional modes). Each intra prediction mode may be indicated through a preset index (i.e., intra prediction mode index). For example, as shown in FIG. 6, the intra prediction mode index 0 indicates a planar mode, and the intra prediction mode index 1 indicates a DC mode. Also, the intra prediction mode indexes 2 to 66 may indicate different angle modes, respectively. The angle modes respectively indicate angles which are different from each other within a preset angle range. For example, the angle mode may indicate an angle within an angle range (i.e., a first angular range) between 45 degrees and -135 degrees clockwise. The angle mode may be defined based on the 12 o'clock direction. In this case, the intra prediction mode index 2 indicates a horizontal diagonal (HDIA) mode, the intra prediction mode index 18 indicates a horizontal (Horizontal, HOR) mode, the intra prediction mode index 34 indicates a diagonal (DIA) mode, the intra prediction mode index 50 indicates a vertical (VER) mode, and the intra prediction mode index 66 indicates a vertical diagonal (VDIA) mode.

Meanwhile, the preset angle range can be set differently depending on a shape of the current block. For example, if the current block is a rectangular block, a wide angle mode indicating an angle exceeding 45 degrees or less than -135 degrees in a clockwise direction can be additionally used. When the current block is a horizontal block, an angle mode can indicate an angle within an angle range (i.e., a second angle range) between (45 + offset 1) degrees and (-135 + offset1) degrees in a clockwise direction. In this case, angle modes 67 to 76 outside the first angle range can be additionally used. In addition, if the current block is a vertical block, the angle mode can indicate an angle within an angle range (i.e., a third angle range) between (45 - offset2) degrees and (-135 - offset2) degrees in a clockwise direction. In this case, angle modes -10 to -1 outside the first angle range can be additionally used. According to an embodiment of the present disclosure, values of offset1 and offset2 can be determined differently depending on a ratio between the width and height of the rectangular block. In addition, offset1 and offset2 can be positive numbers.

According to a further embodiment of the present invention, a plurality of angle modes configuring the intra prediction mode set can include a basic angle mode and an extended angle mode. In this case, the extended angle mode can be determined based on the basic angle mode.

According to an embodiment, the basic angle mode is a mode corresponding to an angle used in intra prediction of the existing high efficiency video coding (HEVC) standard, and the extended angle mode can be a mode corresponding to an angle newly added in intra prediction of the next generation video codec standard. More specifically, the basic angle mode can be an angle mode corresponding to any one of the intra prediction modes {2, 4, 6, ..., 66}, and the extended angle mode can be an angle mode corresponding to any one of the intra prediction modes {3, 5, 7, ..., 65}. That is, the extended angle mode can be an angle mode between basic angle modes within the first angle range. Accordingly, the angle indicated by the extended angle mode can be determined on the basis of the angle indicated by the basic angle mode.

According to another embodiment, the basic angle mode can be a mode corresponding to an angle within a preset first angle range, and the extended angle mode can be a wide angle mode outside the first angle range. That is, the basic angle mode can be an angle mode corresponding to any one of the intra prediction modes {2, 3, 4, ..., 66}, and the extended angle mode can be an angle mode corresponding to any one of the intra prediction modes {-14, -13, -12, ..., -1} and {67, 68, ..., 80}. The angle indicated by the extended angle mode can be determined as an angle on a side opposite to the angle indicated by the corresponding basic angle mode. Accordingly, the angle indicated by the extended angle mode can be determined on the basis of the angle indicated by the basic angle mode. Meanwhile, the number of extended angle modes is not limited thereto, and additional extended angles can be defined according to the size and/or shape of the current block. Meanwhile, the total number of intra prediction modes included in the intra prediction mode set can vary depending on the configuration of the basic angle mode and extended angle mode described above

In the embodiments described above, the spacing between the extended angle modes can be set on the basis of the spacing between the corresponding basic angle modes. For example, the spacing between the extended angle modes {3, 5, 7, ..., 65} can be determined on the basis of the spacing between the corresponding basic angle modes {2, 4, 6, ..., 66}. In addition, the spacing between the extended angle modes {-14, -13, ..., -1} can be determined on the basis of the spacing between corresponding basic angle modes {53, 54, ..., 66} on the opposite side, and the spacing between the extended angle modes {67, 68, ..., 80} can be determined on the basis of the spacing between the corresponding basic angle modes {2, 3, 4, ..., 15} on the opposite side. The angular spacing between the extended angle modes can be set to be the same as the angular spacing between the corresponding basic angle modes. In addition, the number of extended angle modes in the intra prediction mode set can be set to be less than or equal to the number of basic angle modes.

According to an embodiment of the present invention, the extended angle mode can be signaled based on the basic angle mode. For example, the wide angle mode (i.e., the extended angle mode) can replace at least one angle mode (i.e., the basic angle mode) within the first angle range. The basic angle mode to be replaced can be a corresponding angle mode on a side opposite to the wide angle mode. That is, the basic angle mode to be replaced is an angle mode that corresponds to an angle in an opposite direction to the angle indicated by the wide angle mode or that corresponds to an angle that differs by a preset offset index from the angle in the opposite direction. According to an embodiment of the present invention, the preset offset index is 1. The intra prediction mode index corresponding to the basic angle mode to be replaced can be remapped to the wide angle mode to signal the corresponding wide angle mode. For example, the wide angle modes {-14, -13, ..., - 1} can be signaled by the intra prediction mode indices {52, 53, ..., 66}, respectively, and the wide angle modes {67, 68, ..., 80} can be signaled by the intra prediction mode indices {2, 3, ..., 15}, respectively. In this way, the intra prediction mode index for the basic angle mode signals the extended angle mode, and thus the same set of intra prediction mode indices can be used for signaling the intra prediction mode even if the configuration of the angle modes used for intra prediction of each block are different from each other. Accordingly, signaling overhead due to a change in the intra prediction mode configuration can be minimized.

Meanwhile, whether or not to use the extended angle mode can be determined on the basis of at least one of the shape and size of the current block. According to an embodiment, when the size of the current block is greater than a preset size, the extended angle mode can be used for intra prediction of the current block, otherwise, only the basic angle mode can be used for intra prediction of the current block. According to another embodiment, when the current block is a block other than a square, the extended angle mode can be used for intra prediction of the current block, and when the current block is a square block, only the basic angle mode can be used for intra prediction of the current block.

The intra-prediction unit determines reference samples and/or interpolated reference samples to be used for intra prediction of the current block, based on the intra-prediction mode information of the current block. When the intra-prediction mode index indicates a specific angular mode, a reference sample corresponding to the specific angle or an interpolated reference sample from current samples in the current block is used for prediction of a current pixel. Thus, different sets of reference samples and/or interpolated reference samples may be used for intra prediction depending on the intra-prediction mode. After the intra prediction of the current block is performed using the reference samples and the intra-prediction mode information, the decoder reconstructs sample values of the current block by adding the residual signal of the current block, which has been obtained from the inverse transform unit, to the intra-prediction value of the current block.

Motion information used for inter prediction may include reference direction indication information (inter_pred_idc), reference picture index (ref_idx_10, ref_idx_l1 ), and motion vector (mvL0, mvL1). Reference picture list utilization information (predFlagL0, predFlagL1) may be set based on the reference direction indication information. In one example, for a unidirectional prediction using an L0 reference picture, predFlagL0=1 and predFlagL1=0 may be set. For a unidirectional prediction using an L1 reference picture, predFlagL0=0 and predFlagL1=1 may be set. For bidirectional prediction using both the L0 and L1 reference pictures, predFlagL0=1 and predFlagL1=1 may be set.

When the current block is a coding unit, the coding unit may be partitioned into multiple sub-blocks, and the sub-blocks have the same prediction information or different pieces of prediction information. In one example, when the coding unit is in an intra mode, intra-prediction modes of the sub-blocks may be the same or different from each other. Also, when the coding unit is in an inter mode, the sub-blocks may have the same motion information or different pieces of motion information. Furthermore, the sub-blocks may be encoded or decoded independently of each other. Each sub-block may be distinguished by a sub-block index (sbIdx).

The motion vector of the current block is likely to be similar to the motion vector of a neighboring block. Therefore, the motion vector of the neighboring block may be used as a motion vector predictor (MVP), and the motion vector of the current block may be derived using the motion vector of the neighboring block. Furthermore, to improve the accuracy of the motion vector, the motion vector difference (MVD) between the optimal motion vector of the current block and the motion vector predictor found by the encoder from an original video may be signaled.

The motion vector may have various resolutions, and the resolution of the motion vector may vary on a block-by-block basis. The motion vector resolution may be expressed in integer units, half-pixel units, 1/4 pixel units, 1/16 pixel units, 4-integer pixel units, etc. A video, such as screen content, has a simple graphical form such as text, and does not require an interpolation filter to be applied. Thus, integer units and 4-integer pixel units may be selectively applied on a block-by-block basis. A block encoded using an affine mode, which represent rotation and scale, exhibit significant changes in form, so integer units, 1/4 pixel units, and 1/16 pixel units may be applied selectively on a block-by-block basis. Information about whether to selectively apply motion vector resolution on a block-by-block basis is signaled by amvr_flag. If applied, information about a motion vector resolution to be applied to the current block is signaled by amvr_precision_idx.

In the case of blocks to which bidirectional prediction is applied, weights applied between two prediction blocks may be equal or different when applying the weighted average, and information about the weights is signaled via BCW_IDX.

In order to improve the accuracy of the motion vector predictor, a merge or AMVP(advanced motion vector prediction) method may be selectively used on a block-by-block basis. The merge method is a method that configures motion information of a current block to be the same as motion information of a neighboring block adjacent to the current block, and is advantageous in that the motion information is spatially propagated without change in a motion region with homogeneity, and thus the encoding efficiency of the motion information is increased. On the other hand, the AMVP method is a method for predicting motion information in L0 and L1 prediction directions respectively and signaling the most optimal motion information in order to represent accurate motion information. The decoder derives motion information for a current block by using the AMVP or merge method, and then uses a reference block, located in the motion information in a reference picture, as a prediction block for the current block.

A method of deriving motion information in Merge or AMVP involves a method for constructing a motion candidate list using motion vector predictors derived from neighboring blocks of the current block, and then signaling index information for the optimal motion candidate. In the case of AMVP, motion candidate lists are derived for L0 and L1, respectively, so the most optimal motion candidate indexes (mvp_l0_flag, mvp_l1_flag) for L0 and L1 are signaled, respectively. In the case of Merge, a single move candidate list is derived, so a single merge index (merge_idx) is signaled. There may be various motion candidate lists derived from a single coding unit, and a motion candidate index or a merge index may be signaled for each motion candidate list. In this case, a mode in which there is no information about residual blocks in blocks encoded using the merge mode may be called a MergeSkip mode.

The motion candidate and the motion information candidate of this specification may have the same meaning. In addition, the motion candidate list and the motion information candidate list of this specification may have the same meaning.

Symmetric MVD (SMVD) is a method which makes motion vector difference (MVD) values in the L0 and L1 directions symmetrical in the case of bi-directional prediction, thereby reducing the bit rate of motion information transmitted. The MVD information in the L1 direction that is symmetrical to the L0 direction is not transmitted, and reference picture information in the L0 and L1 directions is also not transmitted, but is derived during decoding.

Overlapped block motion compensation (OBMC) is a method in which, when blocks have different pieces of motion information, prediction blocks for a current block are generated by using motion information of neighboring blocks, and the prediction blocks are then weighted averaged to generate a final prediction block for the current block. This has the effect of reducing the blocking phenomenon that occurs at the block edges in a motion-compensated video.

Generally, a merged motion candidate has low motion accuracy. To improve the accuracy of the merge motion candidate, a merge mode with MVD (MMVD) method may be used. The MMVD method is a method for correcting motion information by using one candidate selected from several motion difference value candidates. Information about a correction value of the motion information obtained by the MMVD method (e.g., an index indicating one candidate selected from among the motion difference value candidates, etc.) may be included in a bitstream and transmitted to the decoder. By including the information about the correction value of the motion information in the bitstream, a bit rate may be saved compared to including an existing motion information difference value in a bitstream.

A template matching (TM) method is a method of configuring a template through a neighboring pixel of a current block, searching for a matching area most similar to the template, and correcting motion information. Template matching (TM) is a method of performing motion prediction by a decoder without including motion information in a bitstream so as to reduce the size of an encoded bitstream. The decoder does not have an original image, and thus may schematically derive motion information of a current block by using a pre-reconstructed neighboring block.

A Decoder-side Motion Vector Refinement (DMVR) method is a method for correcting motion information through the correlation of already reconstructed reference videos in order to find more accurate motion information. The DMVR method is a method which uses the bidirectional motion information of a current block to use, within predetermined regions of two reference pictures, a point with the best matching between reference blocks in the reference pictures as a new bidirectional motion. When the DMVR method is performed, the encoder may perform DMVR on one block to correct motion information, and then partition the block into sub-blocks and perform DMVR on each sub-block to correct motion information of the sub-block again, and this may be referred to as multi-pass DMVR (MP-DMVR).

A local illumination compensation (LIC) method is a method for compensating for changes in luma between blocks, and is a method which derives a linear model by using neighboring pixels adjacent to a current block, and then compensate for luma information of the current block by using the linear model.

Existing video encoding methods perform motion compensation by considering only parallel movements in upward, downward, leftward, and rightward directions, thus reducing the encoding efficiency when encoding videos that include movements such as zooming, scaling, and rotation that are commonly encountered in real life. To express the movements such as zooming, scaling, and rotation, affine model-based motion prediction techniques using four (rotation) or six (zooming, scaling, rotation) parameter models may be applied.

Bi-directional optical flow (BDOF) is used to correct a prediction block by estimating the amount of change in pixels on an optical-flow basis from a reference block of blocks with bi-directional motion. Motion information derived by the BDOF of VVC may be used to correct the motion of a current block.

Prediction refinement with optical flow (PROF) is a technique for improving the accuracy of affine motion prediction for each sub-block so as to be similar to the accuracy of motion prediction for each pixel. Similar to BDOF, PROF is a technique that obtains a final prediction signal by calculating a correction value for each pixel with respect to pixel values in which affine motion is compensated for each sub-block based on optical-flow.

The combined inter-/intra-picture prediction (CIIP) method is a method for generating a final prediction block by performing weighted averaging of a prediction block generated by an intra-picture prediction method and a prediction block generated by an inter-picture prediction method when generating a prediction block for the current block.

The intra block copy (IBC) method is a method for finding a part, which is most similar to a current block, in an already reconstructed region within a current picture and using the reference block as a prediction block for the current block. In this case, information related to a block vector, which is the distance between the current block and the reference block, may be included in a bitstream. The decoder can parse the information related to the block vector contained in the bitstream to calculate or set the block vector for the current block.

The bi-prediction with CU-level weights (BCW) method is a method in which with respect to two motion-compensated prediction blocks from different reference pictures, weighted averaging of the two prediction blocks is performed by adaptively applying weights on a block-by-block basis without generating the prediction blocks using an average.

The intra TMP (template matching prediction) method is a method in which a video signal processing device constructs a reference template by using pixel values of surrounding blocks adjacent to the current block, finds the part most similar to the constructed reference template in the already reconstructed area within the current picture, and then uses the corresponding reference block (the part already found in the reconstructed area) as a prediction block for the current block.

The multi-hypothesis prediction (MHP) method is a method for performing weighted prediction through various prediction signals by transmitting additional motion information in addition to unidirectional and bidirectional motion information during inter-picture prediction.

The cross-component linear model (CCLM) is a method that constructs a linear model by using the high correlation between a luma signal and a chroma signal at the same position as the luma signal, and then predict the chroma signal by using the linear model. A template is constructed using a block, which has been completely reconstructed, among neighboring blocks adjacent to a current block, and parameters for the linear model are derived through the template. Next, a current luma block, selectively reconstructed based on video formats so as to fit the size of a chroma block, is downsampled. Finally, the downsampled luma block and the corresponding linear model are used to predict a chroma block of the current block. In this case, a method using two or more linear models is referred to as multi-model linear mode (MMLM).

In independent scalar quantization, a reconstructed coefficient $t'_k$ for an input coefficient $t_k$ depends only on a related quantization index $q_k$. That is, a quantization index for a random reconstructed coefficient has a different value from quantization indexes for other reconstructed coefficients. Here, $t'_k$ may be a value that includes a quantization error in $t_k$, and may be different or the same depending on quantization parameters. Here, $t'_k$ may be called a reconstructed transform coefficient or a dequantized transform coefficient, and the quantization index may be called a quantized transform coefficient.

In uniform reconstruction quantization (URQ), reconstructed coefficients have the characteristic of being arrangement at equal intervals. The distance between two adjacent reconstructed values may be called a quantization step size. The reconstructed values may include 0, and the entire set of available reconstructed values may be uniquely defined based on the quantization step size. The quantization step size may vary depending on quantization parameters.

In the existing methods, quantization reduces the set of acceptable reconstructed transform coefficients, and elements of the set may be finite. Thus, there are limitation in minimizing the average error between an original video and a reconstructed video. Vector quantization may be used as a method for minimizing the average error.

A simple form of vector quantization used in video encoding is sign data hiding. This is a method in which the encoder does not encode a sign for one non-zero coefficient and the decoder determines the sign for the coefficient based on whether the sum of absolute values of all the coefficients is even or odd. To this end, in the encoder, at least one coefficient may be incremented or decremented by "1", and the at least one coefficient may be selected and have a value adjusted so as to be optimal from the perspective of rate-distortion cost. In one example, a coefficient with a value close to the boundary between the quantization intervals may be selected.

Another vector quantization method is trellis-coded quantization, and, in video encoding, is used as an optimal path-searching technique to obtain optimized quantization values in dependent quantization. On a block-by-block basis, quantization candidates for all coefficients in a block are placed in a trellis graph, and the optimal trellis path between optimized quantization candidates is found by considering rate-distortion cost. Specifically, the dependent quantization applied to video encoding may be designed such that a set of acceptable reconstructed transform coefficients with respect to transform coefficients depends on the value of a transform coefficient that precedes a current transform coefficient in the reconstruction order. At this time, by selectively using multiple quantizers according to the transform coefficients, the average error between the original video and the reconstructed video is minimized, thereby increasing the encoding efficiency.

Among intra prediction encoding techniques, the matrix intra prediction (MIP) method is a matrix-based intra prediction method, and obtains a prediction signal by using a predefined matrix and offset values through pixels on the left and top of a neighboring block, unlike a prediction method having directionality from pixels of neighboring blocks adjacent to a current block. In the MIP method, the matrix can be a matrix vector.

To derive an intra-prediction mode for a current block, on the basis of a template which is a random reconstructed region adjacent to the current block, an intra-prediction mode for a template derived through neighboring pixels of the template may be used to reconstruct the current block. First, the decoder may generate a prediction template for the template by using neighboring pixels (references) adjacent to the template, and may use an intra-prediction mode, which has generated the most similar prediction template to an already reconstructed template, to reconstruct the current block. This method may be referred to as template intra mode derivation (TIMD).

In general, the encoder may determine a prediction mode for generating a prediction block and generate a bitstream including information about the determined prediction mode. The decoder may parse a received bitstream to set an intra-prediction mode. In this case, the bit rate of information about the prediction mode may be approximately 10% of the total bitstream size. To reduce the bit rate of information about the prediction mode, the encoder may not include information about an intra-prediction mode in the bitstream. Accordingly, the decoder may use the characteristics of neighboring blocks to derive (determine) an intra-prediction mode for reconstruction of a current block, and may use the derived intra-prediction mode to reconstruct the current block. In this case, to derive the intra-prediction mode, the decoder may apply a Sobel filter horizontally and vertically to each neighboring pixel adjacent to the current block to infer directional information, and then map the directional information to the intra-prediction mode. The method by which the decoder derives the intra-prediction mode using neighboring blocks may be described as decoder side intra mode derivation (DIMD).

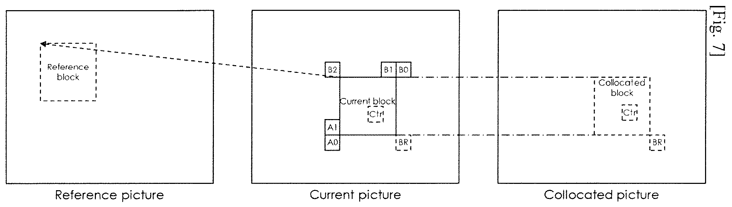

FIG. 7 illustrates the position of neighboring blocks used to construct a motion candidate list in inter prediction.

The neighboring blocks may be spatially located blocks or temporally located blocks. A neighboring block that is spatially adjacent to a current block may be at least one among a left (A1) block, a left below (A0) block, an above (B1) block, an above right (B0) block, or an above left (B2) block. A neighboring block that is temporally adjacent to the current block may be a block in a collocated picture, which includes the position of a top left pixel of a bottom right (BR) block of the current block. When a neighboring block temporally adjacent to the current block is encoded using an intra mode, or when the neighboring block temporally adjacent to the current block is positioned not to be used, a block, which includes a horizontal and vertical center (Ctr) pixel position in the current block, in the collocated picture corresponding to the current picture may be used as a temporal neighboring block. Motion candidate information derived from the collocated picture may be referred to as a temporal motion vector predictor (TMVP). Only one TMVP may be derived from one block. One block may be partitioned into multiple sub-blocks, and a TMVP candidate may be derived for each sub-block. A method for deriving TMVPs on a sub-block basis may be referred to as sub-block temporal motion vector predictor (sbTMVP).

Whether methods described in the present specification are to be applied may be determined on the basis of at least one of pieces of information relating to slice type information (e.g., whether a slice is an I slice, a P slice, or a B slice), whether the current block is a tile, whether the current block is a subpicture, the size of a current block, the depth of a coding unit, whether a current block is a luma block or a chroma block, whether a frame is a reference frame or a non-reference frame, and a temporal layer corresponding a reference sequence and a layer. Pieces of information used to determine whether methods described in the present specification are to be applied may be pieces of information promised between a decoder and an encoder in advance. In addition, such pieces of information may be determined according to a profile and a level. Such pieces of information may be expressed by a variable value, and a bitstream may include information on a variable value. That is, a decoder may parse information on a variable value included in a bitstream to determine whether the above methods are applied. For example, whether the above methods are to be applied may be determined on the basis of the width length or the height length of a coding unit. If the width length or the height length is equal to or greater than 32 (e.g., 32, 64, or 128), the above methods may be applied. If the width length or the height length is smaller than 32 (e.g., 2, 4, 8, or 16), the above methods may be applied. If the width length or the height length is equal to 4 or 8, the above methods may be applied.

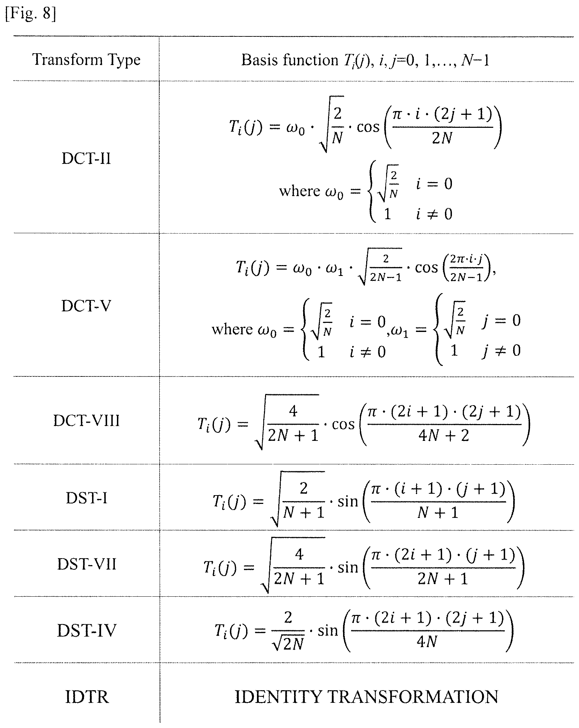

FIG. 8 is a diagram illustrating a type of transform kernel according to an embodiment of the disclosure.

Specifically, FIG. 8 illustrates the definition of the transform kernel used in MTS, and illustrates the equations (basis functions) of DCT-II, DCT-V, DCT-VIII, DST-I, DST-VII, and DST-IV kernels applied to MTS. In the disclosure, DCT-II may be described as DCT-2 (DCT2), DCT-V may be described as DCT-5 (DCT5), DCT-VIII may be described as DCT-8 (DCT8), DST-I may be described as DST-1 (DST1), DST-VII may be described as DST-7 (DST7), and DST-IV may be described as DST-4 (DST4).

DCT and DST may be expressed as functions of cosine and sine, respectively, and when the basis function of the transform kernel for the number of samples N is expressed as $T_i(j)$, index i represents the index in the frequency domain, and index j represents the index within the basis function. That is, as i decreases, it represents a low-frequency basis function, and as i increases, it represents a high-frequency basis function. The basis function $T_i(j)$ represents the $j^{th}$ element of the $i^{th}$ row when expressed as a two-dimensional matrix, and since all of the transform kernels illustrated in FIG. 8 have separable characteristics, transform on the residual signal X may be performed in the horizontal and vertical directions, respectively. When the residual signal block is X and the transform kernel matrix is T, the transform for the residual signal X may be expressed as TXT'. In this case, T' refers to a transpose of the transform kernel matrix T.

The values of the transform matrix defined by the basis function illustrated in FIG. 8 may be in a decimal form rather than an integer form. Accordingly, it may be difficult to implement decimal form values in hardware in a video encoding device and a decoding device. Therefore, an integer-approximated transform kernel from an original transform kernel including decimal form values may be used for encoding and decoding a video signal. The approximated transform kernel including integer form values may be generated through scaling and rounding for the original transform kernel. An integer value included in the approximated transform kernel may be a value within a range that may be expressed by a preconfigured number of bits. The preconfigured number of bits may be 8-bit or 10-bit. Depending on the approximation, the orthonormal properties of DCT and DST may not be maintained. However, since the encoding efficiency loss due to this is not significant, approximating the transform kernel to an integer form may be advantageous in terms of hardware implementation.

Identity transform (IDTR) is a transform in which the result of the transform is the same as before the transform, and is referred to as the identity transform. In general, the identity transform constructs a transform matrix by configuring "1" at the locations where rows and columns have the same value. However, identity transform uses an arbitrary fixed value other than 1 to increase or decrease the value of the input residual signal equally.

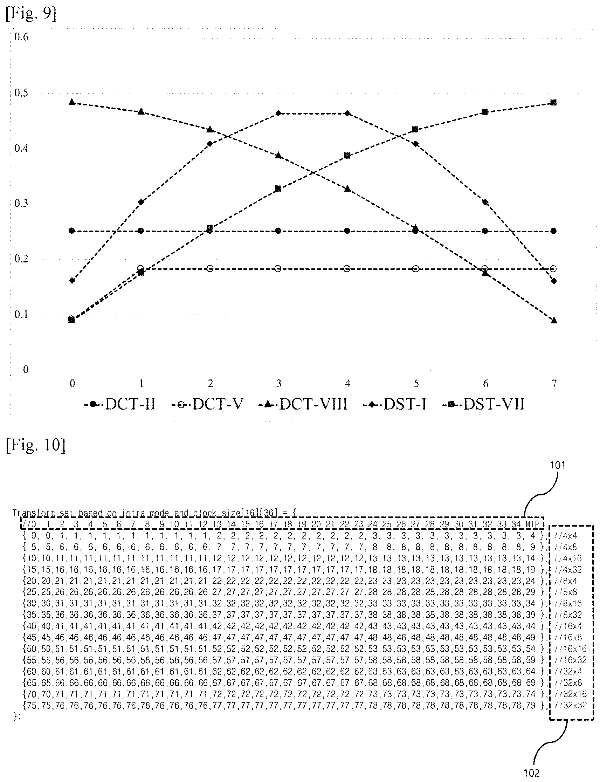

FIG. 9 is a diagram illustrating a $0^{th}$ (the lowest frequency component of the corresponding transform kernel) basis function of DCT-II, DCT-V, DCT-VIII, DST-I, and DST-VII transforms according to an embodiment of the disclosure.

Specifically, FIG. 9 is a graph of $T_i(j)$, which is the transform basis function of DCT/DST defined in FIG. 8, when N is 8 and i is 0, and the horizontal axis represents the index j (j=0, 1, ..., N-1) in the transform basis function, and the vertical axis represents the signal magnitude value.

As illustrated in FIG. 9, since DST-VII shows a tendency for the signal to increase as the index j increases, it may be effective for the pattern of the residual signal in which the energy of the residual signal increases as the distance in the horizontal and vertical directions from the above-left coordinate of the block increases within the residual signal block, such as in-screen prediction.

On the other hand, since DCT-VIII shows a pattern for the signal amplitude to decrease as the index j increases, it may be effective for the pattern of the residual signal in which the energy of the residual signal increases as the distance in the horizontal and vertical directions from the above-left coordinate of the block decreases within the residual signal block.

DCT-I shows a shape for the signal amplitude to increase as the index j in the basis function increases but decreases from a specific index. Therefore, it may be effective for the pattern of the residual signal in which the energy of the residual signal increases as the index moves toward the center of the residual block.

In the case of DCT-II, the $0^{th}$ basis function represents DC, and it may be effective for the pattern of the residual signal in which the pixel value distribution in the residual block is uniform, such as inter-screen prediction.

DCT-V is similar to DCT-II, but the value when j is 0 is smaller than the value when j is not 0, so it has a signal model in the form of a straight line that breaks when j is 1.

In the case of conventional video codecs that mainly use only DCT-II, optimal coding efficiency cannot be achieved because transformation cannot be performed adaptively on the pattern of the residual signal depending on the prediction mode and the characteristics of the original signal. However, high compression efficiency may be expected for adaptive multiple transform (AMT) that performs transform encoding by selecting a transform kernel optimized for the pattern of the residual signal by using various transform kernels differently depending on the prediction mode. Similar to AMT, multiple transform selection (MTS) technology is a transform encoding method that may improve encoding efficiency by adaptively selecting a transform kernel depending on the prediction mode.

Hereinafter, a combination of transform kernels according to an embodiment of the disclosure is described.

DCT2 may be used as the basic transform kernel for reconstructing the current block. Meanwhile, when DCT2 is not used, the remaining kernels (e.g., DCT8, DST7, DCT5, DST4, and DST1) may be used. When DCT2 is not used, some of the preconfigured combinations for the remaining kernels may be used. Table 1 shows a combination of kernels excluding DCT2 and IDTR among the transform kernels disclosed in FIG. 8. Table 1 shows a combination of five types of kernels DCT8, DST7, DCT5, DST4, and DST1. Specifically, Table 1 shows 25 combinations that may be configured with two transform kernels as a pair (combination). A video signal processing device (e.g., decoder, encoder) may use any of the 25 combinations in Table 1 as a transform kernel for the horizontal or vertical direction of the current block. Meanwhile, IDTR may be used only when a specific condition is satisfied.

[Table 1]

```
Transform kernel[25][2]=
{
{DCT8, DCT8},{DCT8, DST7},{DCT8, DCT5},{DCT8, DST4},{DCT8, DST1},
{DST7, DCT8},{DST7, DST7},{DST7, DCT5},{DST7, DST4},{DST7, DST1},
{DCTS, DCT8},{DCT5, DST7},{DCT5, DCT5},{DCT5, DST4},{DCT5, DST1},
{DST4, DCT8},{DST4, DST7},{DST4, DCT5},{DST4, DST4},{DST4, DST1},
{DST1, DCT8},{DST1, DST7},{DST1, DCT5},{DSTI, DST4},{DST1, DST1},
}:
```

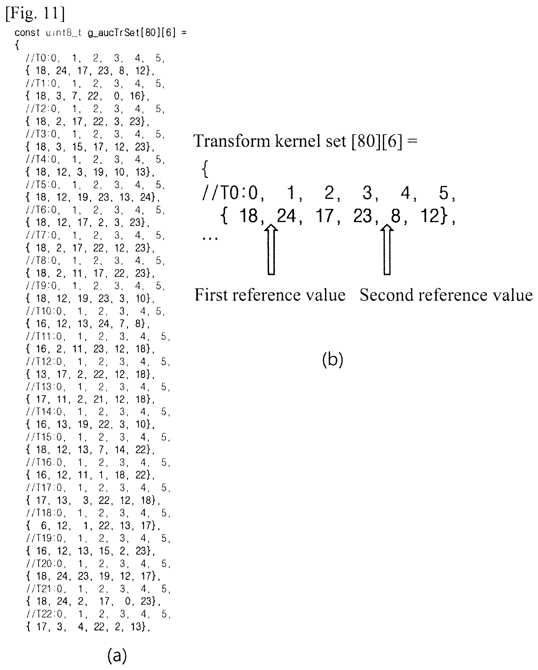

FIGS. 10 and 11 are diagrams illustrating a transform kernel set according to an embodiment of the disclosure.

A transform kernel set determined based on an intra prediction mode of the current block and the size of the current block is described with reference to FIG. 10.

Referring to FIG. 10, the transform kernel used in the intra prediction mode may be determined based on the intra prediction mode and the size of the current block (e.g., coding block, transform block). In addition, FIG. 10 may represent a transform kernel set for MIP. 101 in FIG. 10 represents the type of intra prediction mode (i.e., an index indicating the intra prediction mode), and 102 represents the size (i.e., width x height) of the current block (e.g., coding block, transform block). For example, if the size of the current block is 4x4 and the type of intra prediction mode is 1, the transform kernel for the current block may be determined based on the transform kernel set corresponding to index 0. Referring to FIG. 11, the transform kernel set corresponding to index 0 may be T0 {18, 24, 17, 23, 8, 12}. In addition, the video signal processing device may reconstruct the current block based on the transform kernel (sub-transform kernel set) included in the transform kernel set corresponding to one index of T0. There are six indices corresponding to the transform kernel (sub-transform kernel set) included in the transform kernel set of FIG. 11, but this is only an example and number of indices may be 4.

FIG. 11A illustrates a transform kernel set consisting of indices corresponding to six transform kernels. FIG. 11A is a diagram illustrating some of 80 transform kernel sets consisting of indices corresponding to six transform kernels. Likewise, each index constituting the transform kernel set of FIG. 11A may correspond to one combination of the transform kernel combinations (sub-transform kernel sets) of Table 1. For example, 25 combinations of Table 1 may be indexed from 0 to 24, respectively, and the combination of indices included in one transform kernel set of FIG. 11 and Table 1 may correspond. The transform kernel set of FIG. 11A may be determined based on the size of the current block (coding block, transform block) and the intra prediction mode of the current block. FIG. 11B is a diagram illustrating the first transform kernel set T0 among the transform kernel sets of FIG. 11A. The indices of the transform kernel set may be grouped into multiple groups based on a preconfigured agreement. That is, the number of indices of the transform kernel set to be grouped may be configured adaptively. In this case, the group may be composed of three or more. Referring to FIG. 11B, the indices of the transform kernel set may be grouped based on multiple reference values (e.g., the first reference value and the second reference value). For example, if the grouping value is less than or equal to the first reference value, a group including one index (18) may be selected, if the grouping value is greater than the first reference value and less than or equal to the second reference value, a group including four indices (18, 2, 17, 23) may be selected, and if the grouping value is greater than the second reference value, a group including six indices (18, 24, 17, 23, 8, 12) may be selected. If the grouping value is compared to the reference value and the corresponding group is selected according to the predetermined configuration, there may be an effect of reducing complexity compared to signaling/parsing one of the six indices (transform kernels) for the current block. In this case, the reference value may be a sum of the transform coefficients, and the first reference value and the second reference value may be determined based on the sum of the transform coefficients. For example, the first reference value may be 6, and the second reference value may be 32.

A separate signaling may be required to indicate the index included in the group selected by comparing the reference value and the grouping value. For example, as illustrated in FIG. 11B, if the grouping value is greater than the first reference value and less than or equal to the second reference value, the selected group may be a group consisting of indices of (18, 24, 17, 23). In this case, a separate signaling may be required to indicate each of the four indices. Likewise, if the grouping value is greater than the second reference value, the selected group may be a group consisting of indices of (18, 24, 17, 23, 8, 12). In this case, a separate signaling (mts_idx) may be required to indicate each of the six indices. The index within the transform kernel set may be indicated by the mts_idx described above. In this case, mts_idx may have a fixed bit size. For example, mts_idx for 6 indices may have a 3 bit size. Alternatively, mts_idx may be signaled by the truncated unary binarization (TB) method. As mts_idx is coded by the TB method, context model-based CABAC coding may be applied to the first bin and TB-based CABAC coding may be applied to the remaining bins.

Meanwhile, if the grouping value is equal to or less than the first reference value, the selected group may be a group consisting of an index of 18. In this case, since the group consists of only one index, separate signaling for indicating one index may not be required.

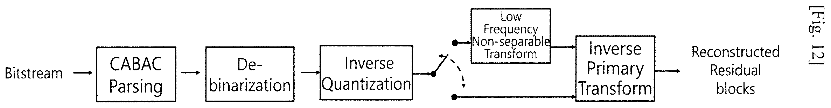

FIG. 12 is a diagram illustrating a process of reconstructing a residual signal according to an embodiment of the disclosure.

The residual signal, which is the difference between the original signal and the predicted signal, has a characteristic that the energy distribution of the signal changes depending on the prediction method. Therefore, if the transform kernel is adaptively selected depending on the prediction method, such as MTS, the encoding efficiency may be improved. In addition, if the transformation using only MTS or DCT2 kernel is called the primary transform, the video signal processing device may also improve the encoding efficiency by additionally performing the secondary transform on the primarily transformed coefficient block. The secondary transform is effective in terms of energy compaction, especially for the predicted residual signal block in the screen, where strong energy is likely to exist in a direction other than the horizontal or vertical direction of the residual signal block.

Referring to FIG. 12, the video signal processing device may parse a syntax element related to the residual signal included in the bitstream and reconstruct the quantization coefficient through inverse binarization based on the parsing result. The video signal processing device may perform inverse quantization on the reconstructed quantization coefficient to obtain the transform coefficient. The video signal processing device may perform inverse transform on the transform coefficient to reconstruct the residual signal block. In this case, the inverse transform may be applied to the block to which the transform skip (TS) is not applied. The video signal processing device may perform inverse transform in the order of the secondary inverse transform and the primary inverse transform. In this case, the secondary inverse transform may be omitted. For example, if the current block is encoded in an inter prediction mode, the secondary inverse transform may be omitted. In addition, the secondary inverse transform may be omitted depending on the size of the current block. The reconstructed residual signal includes a quantization error, and the secondary transform may reduce the quantization error compared to when only the primary transform is performed by changing the energy distribution of the residual signal.

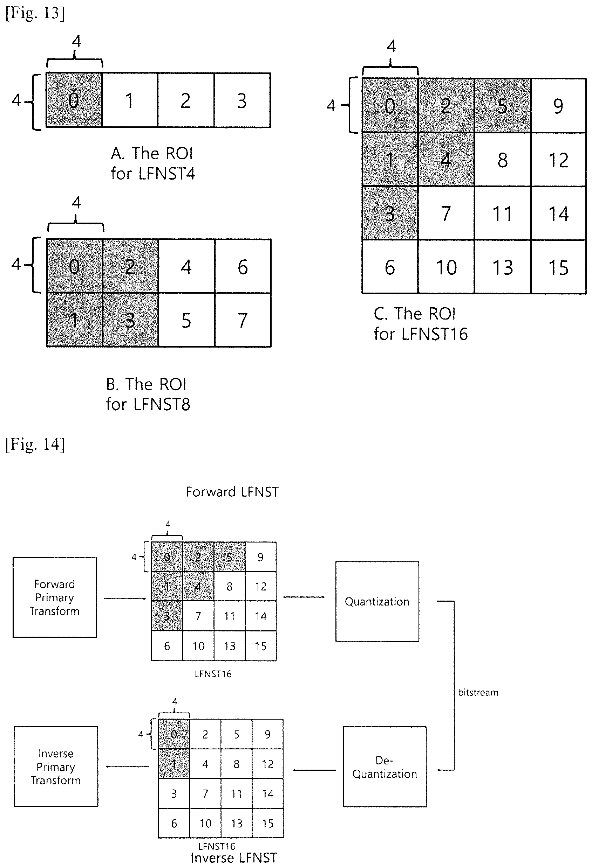

FIG. 13 is a diagram illustrating a region-of-interest (ROI) of a block to which secondary transform is applied according to an embodiment of the disclosure.

According to an embodiment of the disclosure, the number indicated in the sub-block in FIG. 13 may be a sub-block index, and the sub-block index may be a scan order and may be scanned in order from a small number to a large number.

FIG. 13A illustrates the ROI of LFNST4. The ROI of LFNST4 may be an ROI for a $4 \times N$ or $N \times 4$ size transform block. In this case, N may be an integer between 4 and 128. Referring to FIG. 13A, the ROI of LFNST4 may be an ROI in a $16 \times 4$ block composed of four sub-blocks (sub-block 0 to sub-block 3). In this case, the ROI is one sub-block having a size of $4 \times 4$, and referring to FIG. 13A, the ROI corresponds to sub-block 0. The number of input samples of the ROI may be 16. The forward transform matrix of LFNST4 may be R x 16. In this case, R may be 4, 8, 16, etc. For example, if R is 16, there may be 16 transform coefficients generated after transformation.

FIG. 13B illustrates the ROI of LFNST8. The ROI of LFNST8 may be an ROI for an $8 \times N$ or $N \times 8$ size transform block. In this case, N may be an integer between 8 and 128. Referring to FIG. 13B, the ROI of LFNST8 may be an ROI in a $16 \times 8$ block composed of eight sub-blocks (sub-block 0 to sub-block 7). In this case, the ROI may be an area corresponding to four sub-blocks of 4 x 4 size, and referring to FIG. 13B, the ROI corresponds to sub-blocks 0, 1, 2, and 3. The number of input samples of the ROI may be 64. The forward transform matrix of LFNST8 may be R x 64. In this case, R may be 8, 16, 32, 64, etc. For example, if R is 32, there may be 32 transform coefficients generated after transformation.

FIG. 13C illustrates the ROI of LFNST16. The ROI of LFNST8 may be an ROI for a $16 \times N$ or $N \times 16$ size transform block. In this case, N may be an integer between 16 and 128. Referring to FIG. 13C, the ROI of LFNST16 may be an ROI in a $16 \times 16$ block composed of sixteen sub-blocks (sub-block 0 to sub-block 15). In this case, the ROI may be an area corresponding to six sub-blocks of 4 x 4 size, and referring to FIG. 13B, the ROI corresponds to sub-blocks 0, 1, 2, 3, 4, and 5. The number of input samples of the ROI may be 96. The forward transform matrix of LFNST16 may be R x 96. In this case, R may be 8, 16, 32, 64, 96, etc. For example, if R is 32, there may be 32 transform coefficients generated after transformation.

FIG. 14 is a diagram illustrating a method of applying a secondary transform (LFNST) according to an embodiment of the disclosure.

The secondary transform may be expressed as the product of the matrix of the secondary transform kernel and the primarily transformed coefficient vector. In other words, this may be interpreted as mapping the primarily transformed coefficient to another space. In this case, if the number of secondarily transformed coefficients is reduced, that is, if the number of basis vectors constituting the secondary transform kernel is reduced, the amount of calculation required for the secondary transform and the memory capacity required for storing the transform kernel may be reduced. For example, when a video signal processing device performs the secondary transform on an area corresponding to the above-left ROI of a transform block, if the number of secondary transform coefficients is reduced to 32, a secondary transform kernel of 32 x 96 size may be applied, and an inverse secondary transform kernel of 96 x 32 size may be applied.

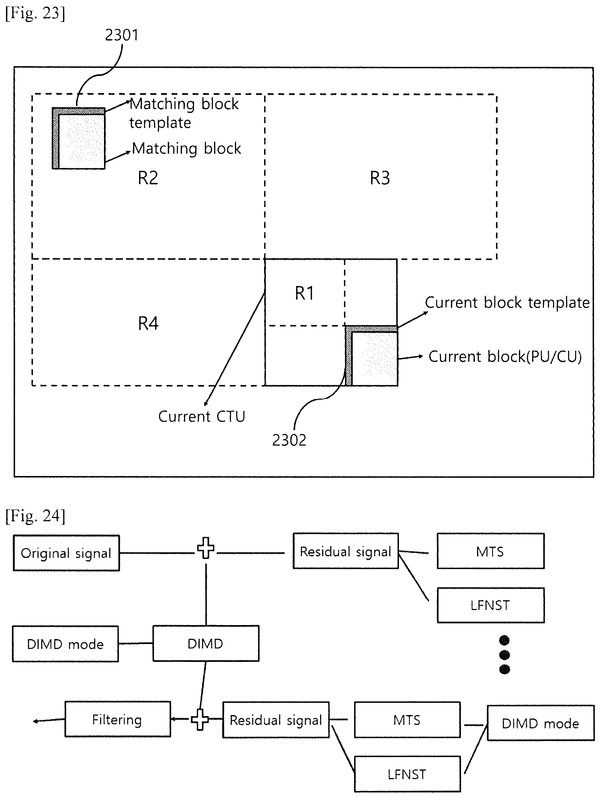

Referring to FIG. 14, the encoder may perform forward primary transform on a residual signal block to obtain the primarily transformed coefficient block. In this case, the residual signal may be a signal obtained by intra prediction. The size of the primarily transformed coefficient block may be $M \times N$. The encoder may perform forward primary transform on the residual signal block having a value of min(M,N) of 16 to obtain the primarily transformed coefficient block. In addition, the encoder may perform 32 x 96 secondary transform (LFNST) on samples of the above-left ROI area of the primarily transformed coefficient block (sub-block 0 to sub-block 5 in FIG. 23). In addition, the encoder may perform forward primary transform on the residual signal block having a value of min(M,N) of 8 to obtain the primarily transformed coefficient block. In addition, the encoder may perform secondary transform on the samples of the above-left ROI area of the primarily transformed coefficient block.

Referring to FIG. 14, the transform coefficients of the entire transform block size including the secondarily transformed coefficients may be quantized, and information on the quantized transform coefficients may be included in the bitstream. In addition, the bitstream may include a syntax element (lfnst_idx) related to the secondary transform. Specifically, the bitstream may include information whether the secondary transform is applied to the current block and information indicating the transform kernel.

Referring to FIG. 14, the decoder may parse transform coefficients quantized from the bitstream and obtain transform coefficients through de-quantization. The decoder may determine whether to perform an inverse secondary transform (Inverse LFNST) on the current transform block based on the syntax element related to the secondary transform. If an inverse secondary transform is applied to the current transform block, 16 or 32 transform coefficients may be input to the inverse secondary transform depending on the size of the transform block. The number of transform coefficients that are input to the inverse secondary transform may be the same as the number of transform coefficients obtained by the encoder performing the secondary transform. The decoder may obtain the primarily transformed coefficient by multiplying the vectorized transform coefficient and the inverse secondary transform kernel matrix. The inverse secondary transform kernel may be determined based on the size of the transform block, the intra prediction mode, and the syntax element indicating the transform kernel. The inverse secondary transform kernel matrix may be the transpose matrix of the secondary transform kernel matrix, and considering the complexity of the implementation, the elements of the kernel matrix may be integers expressed with 10-bit or 8-bit accuracy. Since the primary transform coefficient obtained through the inverse secondary transform is in the form of a vector, it may be expressed as data in the form of a two-dimensional form. The primary transform coefficient may be dependent on the intra prediction mode. The mapping relationship based on the intra prediction mode applied by the encoder may be equally applied. The decoder may obtain a residual signal by performing inverse primary transform on the transform coefficient block of the entire transform block size including the transform coefficient obtained by performing inverse secondary transform. The process described with reference to FIG. 14 may include a scaling process using a bit shift operation.

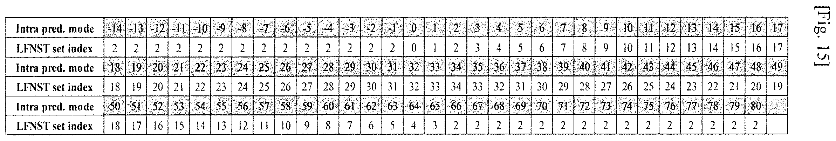

FIG. 15 is a diagram illustrating a mapping relationship between an intra prediction mode and a transform kernel set for secondary transform according to an embodiment of the disclosure.

A transform kernel set for LFNST applied to a transform block may be determined for each intra prediction mode of the transform block. One transform kernel set may be composed of multiple LFNST kernels. For example, one transform kernel set may be composed of three or four LFNST kernels. The transform kernel set may be 35, and each transform kernel set may be indexed with an index of 0 to 34. Intra prediction mode indices -14 to -1 and 67 to 80 corresponding to the extended angle mode may be mapped to the transform kernel set with index 2.

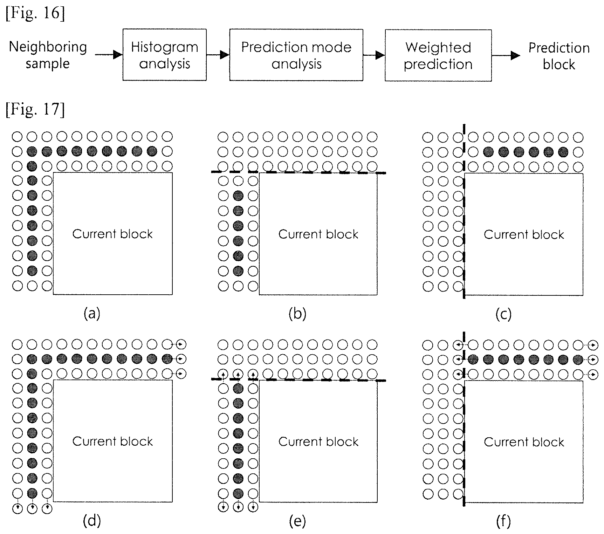

FIG. 16 is a diagram illustrating a process of generating a prediction block by using DIMD according to an embodiment of the disclosure.

Referring to FIG. 16, the decoder may derive the prediction block by using a surrounding sample (block, pixel). In this case, the surrounding sample may be a surrounding block (pixel) of the current block. Specifically, the decoder may determine intra prediction modes and weight information for reconstructing the current block through a histogram for directional information (angle information) by using the surrounding sample as an input.

FIG. 17 is a diagram illustrating locations of surrounding pixels used to derive directional information according to an embodiment of the disclosure.

FIG. 17A illustrates a case when all the surrounding blocks of the current block are available to derive directional information, FIG. 17B illustrates a case when the above boundary of the current block is a sub-picture, slice, tile, or CTU boundary, and FIG. 17C illustrates a case when the left boundary of the current block is a sub-picture, slice, tile, or CTU boundary. Meanwhile, if the surrounding block and the current block do not belong to the same sub-picture, slice, tile, and CTU, the surrounding block may not be used to derive directional information. The gray point in FIG. 17 represents the location of the pixel used to derive actual directional information, and the dotted line represents the sub-picture, slice, tile, and CTU boundary. In addition, referring to FIGS. 17D to 17F, pixels located at the boundary may be padded out of the boundary by one pixel to derive directional information. Through this padding, more accurate directional information may be derived.

In order to derive directional information on a pixel at a specific location, a Sobel filter having a size of 3×3 of Equation 1 may be applied in the horizontal and vertical directions, respectively. A in Equation 1 may mean pixel information (values) of reconstructed surrounding blocks of the current block 3×3 size. In addition, the directional information θ may be determined using Equation 2. In order to reduce computational complexity for deriving directional information, the decoder may derive the directional information θ only by calculation for Gy/Gx of Equation 1 without calculating the atan function of Equation 2.

[Equation 1]

$$G_x = \begin{bmatrix} -1 & 0 & 1 \\ -2 & 0 & 2 \\ -1 & 0 & 1 \end{bmatrix} * A \quad \text{et} \quad G_y = \begin{bmatrix} -1 & -2 & -1 \\ 0 & 0 & 0 \\ 1 & 2 & 1 \end{bmatrix} * A$$

[Equation 2]

$$\theta = \operatorname{atan}\left(\frac{G_y}{G_x}\right)$$

Referring to FIG. 17, directional information may be calculated for every gray point displayed in FIG. 17, and directional information may be mapped to an angle of the intra prediction mode. The intra prediction mode set may include a planar mode, a DC mode, and multiple (e.g., 65) angle modes (i.e., directional modes). The intra prediction mode may be 67 modes, and the directional information (angle, $\theta$) calculated through Equation 2 may be a value of a real number unit. Therefore, a process of mapping the directional information to a specific intra prediction directional mode is required. The intra prediction directional mode described in the disclosure may be the same as the angle mode illustrated in FIG. 6. In addition, in the disclosure, a method of mapping (determining) an intra prediction directional mode by deriving intra prediction directional information may be described by the DIMD method.

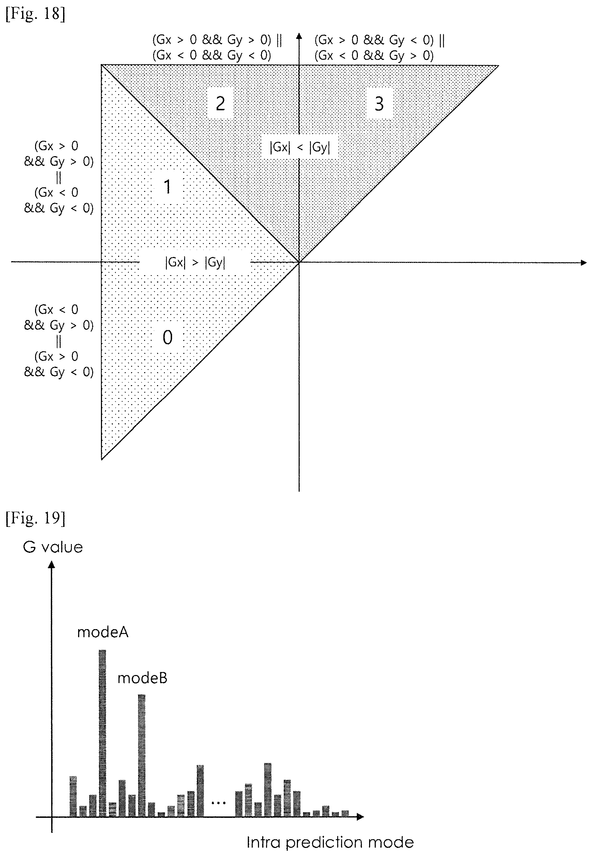

FIG. 18 is a diagram illustrating a method of mapping a directional mode according to an embodiment of the disclosure.

Referring to FIG. 18, the intra prediction directional mode may be divided into four sections based on 0 degrees (index 18), 45 degrees (index 34), 90 degrees (index 50), and 135 degrees (index 66) (refer to FIG. 6). Referring to FIG. 10, the sections for determining the intra prediction directional mode may be divided into four sections from section 0 to section 3. Section 0 may be from -45 degrees to 0 degrees, section 1 may be from 0 degrees to 45 degrees, section 2 may be from 45 degrees to 90 degrees, and section 3 may be from 90 degrees to 135 degrees. In this case, each section may include 16 intra prediction directional modes. The directional mode may be determined by comparing the signs and magnitudes of Gx and Gy calculated through Equation 1, and one of the four sections may be determined. For example, if Gx and Gy are positive and the absolute value of Gx is greater than the absolute value of Gy, section 1 may be selected. The intra prediction directional mode mapped to each section may be determined through the directional information $\theta$ calculated from Equation 2. Specifically, the decoder extends the value by multiplying the directional information $\theta$ by 2^16. In addition, the decoder may compare the extended value with the values of the predefined table, find the value closest to the extended value, and determine the intra prediction directional mode based on the closest value. In this case, the values of the predefined table may be 17. Specifically, the values of the predefined table may be {0, 2048, 4096, 6144, 8192, 12288, 16384, 20480, 24576, 28672, 32768, 36864, 40960, 47104, 53248, 59392, 65536}. In this case, the difference between the predefined table values may be configured differently depending on the difference between the angles of the intra prediction direction mode.

On the other hand, if the atan calculation is not performed to reduce the computational complexity and only Gy/Gx is used to obtain the directional angle, the difference between the predefined table values may be inconsistent with the distance between the angles of the intra prediction directional mode. The atan has a characteristic that the slope gradually decreases as the input value increases. Therefore, the above-defined table should also be configured by considering not only the difference between the angles of the intra prediction directional mode but also the nonlinear characteristic of atan. For example, the difference between the above-defined table values may be configured to gradually decrease. Conversely, the difference between the above-defined table values may be configured to gradually increase.

If the width and height of the current block are different, the available intra prediction directional mode may be different. That is, if the width and height of the current block are different, the section for deriving the intra prediction directional mode may be different. In other words, the section for deriving the intra prediction directional mode may be changed based on the width and height of the current block (e.g., the ratio of the width and height). For example, if the width of the current block is longer than the height, the intra prediction mode may be remapped from 67 to 80, and the intra prediction mode in the opposite direction may be excluded from 2 to 15. For example, if the width of the current block is n (integer) times longer than the height (for example, 2 times), the intra prediction mode {3, 4, 5, 6, 7, 8} may be reconfigured (mapped) to {67, 68, 69, 70, 71, 72}, respectively. In addition, if the width of the current block is longer than the height, the intra prediction mode may be reconfigured to a value that adds '65' to the intra prediction mode. On the other hand, if the width of the current block is shorter than the height, the intra prediction mode may be reconfigured to a value that subtracts "67" from the intra prediction mode.

A histogram may be used to derive an intra prediction directional mode for reconstruction of the current block. As a result of obtaining directional information on surrounding blocks, if there are more blocks without directionality than blocks with directionality, the prediction mode for blocks without directionality may have the highest cumulative value in the histogram. However, since a directional mode must be derived for reconstruction of the current block, the prediction mode for blocks without directionality may be excluded even if the prediction mode has the highest cumulative value in the histogram. That is, a smooth area with no gradient between surrounding pixels or no directionality may not be used to derive the intra prediction directional mode. For example, the prediction mode for a block without directionality may be a planar mode or a DC mode. If the left neighboring block is a planar mode or a DC mode, the left neighboring block may not be used to derive directional information, and only the above neighboring block may be used to derive directional information. If the neighboring blocks of the current block include a mixture of smooth areas and areas with directionality, the decoder may generate a histogram by using the G value calculated as in Equation 3 to emphasize directionality. In this case, the histogram may be an accumulated value in which the calculated G value is added to each generated intra prediction directional mode, rather than a frequency-based one in which '1' is added to each generated intra prediction directional mode.

[Equation 3]

$$G = \left| G_x \right| + \left| G_y \right|$$

FIG. 19 is a diagram illustrating a histogram for deriving an intra prediction directional mode according to an embodiment of the disclosure.

The X-axis of FIG. 19 represents the intra prediction directional mode, and the Y-axis represents the accumulated value of G values. The decoder may select the intra prediction directional mode with the largest accumulated value of G values among the intra prediction directional modes. In other words, the decoder may select the intra prediction directional mode for the current block based on the accumulated value. Referring to FIG. 19, modeA with the largest accumulated value and modeB with the second largest accumulated value may be selected as the intra prediction directional mode. In order to generate a prediction block for the current block, the decoder may generate a final prediction block by weight averaging the prediction block generated by modeA, the prediction block generated by modeB, and finally the prediction blocks generated by a planar mode. In this case, the weight of each prediction block may be determined by using the accumulated value of modeA and modeB. For example, the weight for the prediction block generated by the planar mode may be set to 1/3 of the total weight. The weight for the prediction block generated by modeA may be configured to a weight corresponding to the value obtained by dividing the modeA accumulated value by the sum of the accumulated values of modeA and modeB. The weight for the prediction block generated by modeB may be determined as a value that is a difference between the modeA weight and 1/3 of the total weight. In order to make the calculation of the weight more accurate, the decoder may expand the range of the weight by multiplying the weight for the prediction block generated by modeA by an arbitrary value. The weight for the prediction block generated by modeB and the weight for the prediction block generated by the planar mode may also be expanded in the same way.

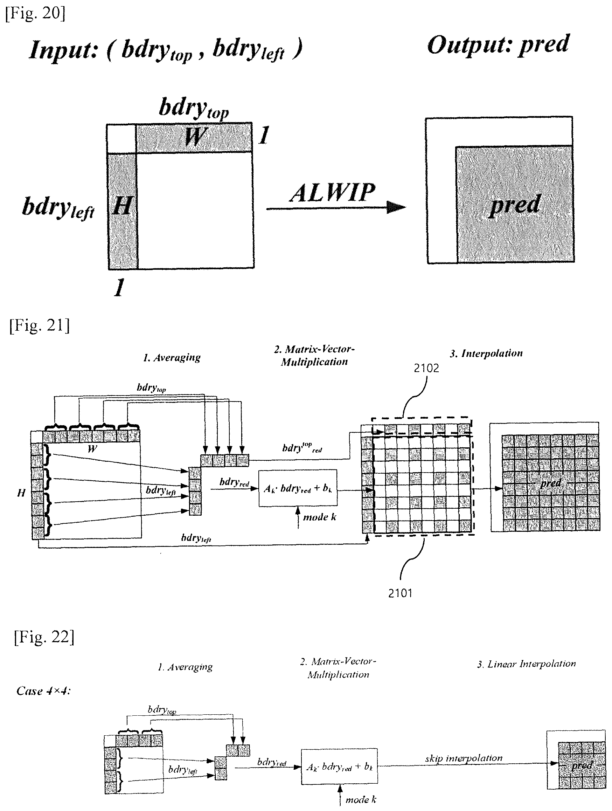

FIGS. 20 to 22 illustrate matrix-based intra prediction according to an embodiment of the disclosure.

Referring to FIG. 20, the video signal processing device may obtain (output) a prediction block (pred) by predicting the current block by using (inputting) $bdry_{top}$ and $bdry_{left}$. The $bdry_{top}$ represents above reference samples of the current block and may be W of FIG. 20. The $bdry_{left}$ represents left reference samples of the current block and may be H of FIG. 20. The reference sample line may be the one closest to the current block. The video signal processing device may obtain a prediction block of the current block based on the reference samples, matrix, and offset value. The method of obtaining a prediction block as shown in FIG. 20 may be described as matrix based intra prediction (MIP). The MIP of the disclosure may be described as affine linear weighted intra prediction (ALWIP).

A method of performing matrix-based intra prediction is described with reference to FIG. 21. FIG. 21 is a diagram illustrating a method of performing matrix-based intra prediction when the current block size is $8 \times 8$. First, i) the video signal processing device may perform an averaging process on neighboring reference samples of the current block. In the averaging process, the top reference samples $bdry_{top}$ of the current block may be re-expressed as the average value of a predetermined group of units. For example, the video signal processing device may generate four new reference samples $bdry^{top}_{red}$ by taking the average of two reference samples from the top eight reference samples $bdry_{top}$ of the current block. Likewise, the video signal processing device may generate four new reference samples $bdry^{left}_{red}$ by taking the average of two reference samples from the left eight reference samples $bdry_{left}$ of the current block. Therefore, the video signal processing device may obtain a total of eight new reference samples. The number of newly generated reference samples after the averaging process may be determined according to the size of the current block. Next, ii) the video signal processing device may obtain the prediction block (pred) of the current block by performing a matrix vector multiplication process. The video signal processing device may determine the matrix and offset value required in the matrix vector multiplication process for obtaining the prediction block of the current block based on the result of step i) (i.e., each of the four new samples (bdry$^{top}_{red}$, bdry$^{left}_{red}$)) and/or mode k. Mode k is described later. iii) the video signal processing device may perform interpolation. The result value (the prediction block (pred) of the current block) in step ii) may be mapped to the designated location of the current block. If the current block is larger than the reference sample that has been downsampled (e.g., the averaging process of step i), the video signal processing device may generate the final prediction block by applying single step linear interpolation in the vertical or horizontal direction or in the vertical and horizontal directions. The single step linear interpolation may be applied to a block having max(W, H)>=8 among blocks having a size of W×H. The W may be the width (horizontal) of the current block, H may be the height (vertical) of the current block, and max(W, H) is a function that outputs the larger value between W and H. Specifically, when the size of the current block is 8 x 8 (refer to FIG. 21), the video signal processing device may obtain 8 new reference samples. In addition, the video signal processing device may obtain 16 new samples by performing the matrix vector multiplication process. The 16 new samples may be mapped to specific locations of the prediction block of the current block (gray shaded parts of 2101 in FIG. 21). In the linear interpolation (e.g., single step linear interpolation) process, the reference samples corresponding to the width of the current block may be reference samples generated in the averaging process mapped to specific locations (gray shaded parts of 2102 in FIG. 21). Referring to 2102 of FIG. 21, a specific location may be an odd number (the first, third, fifth, and seventh of 2102 in FIG. 21). The reference samples corresponding to the height of the current block may be the same as the reference samples used in the averaging process. In this case, the video signal processing device may perform filtering on the reference samples used in the linear interpolation process. For example, the video signal processing device may perform filtering by using bit shift operator 2 after applying and adding upper and lower weights [1,2,1] based on the current sample.

$$[\text{Equation 4}]$$
$$\text{pred} = A \times \text{bdry}_{red} + b$$

A in Equation 1 is a matrix, and if the width W and height H of the current block are 4, A may be a 4 x 4 matrix with 4 rows and 4 columns. If at least one of the width W and the height H of the current block is not 4, A may be an 8×8 matrix with 8 rows and 8 columns. b is an offset value in the form of a vector, which may have a size of W$_{red}$ x H$_{red}$. Matrix A and vector b may be one of three sets S$_0$, S$_1$, and S$_2$. S$_0$ may be composed of 18 matrices, and each matrix may be composed of 16 rows and 4 columns and may have 18 offset vectors. S$_1$ may be composed of 10 matrices, and each matrix may be composed of 16 rows and 8 columns and may have 10 offset vectors. S$_2$ may be composed of 6 matrices, and each matrix may be composed of 64 rows and 8 columns and may have 6 offset vectors. S$_0$, S$_1$, and S$_2$ may be indicated by a separate index (idx). The index may be determined as illustrated in Equation 5.

$$[\text{Equation 5}]$$
$$idx(W,H) = \begin{cases} 0 \ for \ W = H = 4 \\ 1 \ for \ max(W,H) = 8 \\ 2 \ for \ max(W,H) > 8 \end{cases}$$

In Equation 5, W may be the width (horizontal) of the current block, and H may be the height (vertical) of the current block. Max(W, H) is a function that outputs a larger value among W and H.

A method of determining the mode k may be as follows.

The mode k may be for a transform kernel set for MIP. The mode k may be used to determine a matrix for MIP. The mode k may be determined based on an intra prediction mode (e.g., an angle mode) and/or the size of the current block. For example, if the intra prediction mode is an angle mode with an index lower than 18 and the width and height of the current block are 4, the mode k may be the same mode as the intra prediction mode. If the intra prediction mode is an angle mode with an index greater than or equal to 18 and the width and height of the current block are 4, the mode k may be an angle mode corresponding to an index of the intra prediction mode minus 17. If the intra prediction mode is an angle mode with an index lower than 10 and the larger value among the width and height of the current block is 8, the mode k may be the same as the intra prediction mode. If the intra prediction mode is an angle mode with an index greater than or equal to 10 and the larger value of the width and height of the current block is 8, the mode k may be an angle mode corresponding to an index of the intra prediction mode minus 9. If the intra prediction mode is an angle mode with an index less than 6 and the larger value among the width and height of the current block is greater than 8, the mode k may be the same as the intra prediction mode. If the intra prediction mode is an angle mode with an index greater than or equal to 6 and the larger value among the width and height of the current block is greater than 8, the mode k may be an angle mode corresponding to an index of the intra prediction mode minus 5. If the mode k is organized into an equation, it may be as illustrated in Equation 6.

$$[\text{Equation 6}]$$
$$\text{mode(mode k) for W=H=4 and intra prediction mode} < 18$$
$$\text{mode-17(mode k) for W=H=4 and intra prediction mode} >= 18$$
$$\text{mode(mode k) for max(W, H)=8 and intra prediction mode} < 10$$
$$\text{mode-9(mode k) for max(W, H)=8 and intra prediction mode} >= 10$$
$$\text{mode (mode k) for max(W, H)} > 8 \text{ and intra prediction mode} < 6$$
$$\text{mode-5(mode k) for max(W, H)} > 8 \text{ and intra prediction mode} >= 6$$

FIG. 22 illustrates a method of performing matrix-based intra prediction by a video signal processing device when the current block size is $4\times4$.

Referring to FIG. 22, if the size of the current block is $4\times4$, the video signal processing device may generate four new reference samples after the averaging process. For example, the video signal processing device may generate two new reference samples $\text{bdry}^{top}_{red}$ by taking the average of two reference samples from the top four reference samples $\text{bdry}_{top}$ of the current block. Likewise, the video signal processing device may generate two new reference samples $\text{bdry}^{left}_{red}$ by taking the average of two reference samples from the left four reference samples $\text{bdry}_{left}$ of the current block. Therefore, the video signal processing device may obtain a total of four new reference samples. The video signal processing device may perform the matrix vector multiplication process based on the four new reference samples. In this case, the video signal processing device may obtain the prediction block of the current block without performing additional linear interpolation (e.g., single step linear interpolation). If the size of the current block is 4 x 4, the number of samples of the prediction block of the current block may be 16, which may be the same as the number of samples for the matrix vector multiplication process.

FIG. 23 is a diagram illustrating intra template matching according to an embodiment of the disclosure.

When performing intra template matching, the video signal processing device may find a template having a high similarity to the template of the current coding/prediction block or the template with the lowest cost within the predetermined search area within the current frame/slice, and use the block corresponding to the found template as the prediction block of the current block. Referring to FIG. 23, the predetermined search area may be four areas R1, R2, R3, and R4 including the current CTU. R1 may be a CTU including the current coding/prediction block, and may be a CTU neighboring R2, R3, and R4. The size of the CTU may be 32, 64, 128, or 256, and may be a square shape. Referring to FIG. 23, the templates (2301 and 2302 of FIG. 23) may be configured in an L shape, and the size of the template may be 4. However, the size is not limited to 4. The video signal processing device may use a sum of absolute transformed differences (SATD) method to find the template with the lowest cost for the template within the determined search area. In addition, the video signal processing device may use Hadamard transform for intra template matching. In the disclosure, a predetermined search area, CTU size, shape, template shape, and size have been illustrated for convenience of description, but are not limited thereto.

FIG. 24 is a diagram illustrating an encoding/decoding process of a signal related to a DIMD method according to an embodiment of the disclosure.

In order to perform prediction using the DIMD method, the video signal processing device may derive ModeA and ModeB described in FIGS. 16 to 19. In the DIMD prediction method, the first mode and the second mode may be derived by the method described in FIGS. 16 to 19. The video signal processing device may generate the final prediction block of the current block by superimposing ModeA, ModeB, and the planar mode. ModeA and ModeB may be described as DIMD modes. If ModeA and ModeB are angle modes, ModeA and ModeB may be transformed to the wide angle mode based on the size of the current block (e.g., coding block, transform block, and prediction block). Based on the transformed wide angle mode, the video signal processing device may generate the prediction block of the current block. The video signal processing device may perform a transform process on the residual signal of the predicted prediction block by using the DIMD method. In this case, the transform method for the transform process may be MTS or LFNST. The MTS and LFNST are based on intra prediction mode, and the video signal processing device may derive a transform kernel set for each of MTS and LFNST. Each kernel set may be composed of multiple kernel candidates. The intra prediction mode derived by the DIMD method may be a mode derived based on surrounding sample information of the current block, and may be angle modes 0 to 67. Therefore, the transform process to the extended angle mode may be omitted for the intra prediction mode derived by the DIMD mode. The video signal processing device may generate prediction blocks of the current block without transform to the extended angle mode for the intra prediction mode derived by the DIMD mode. In addition, in deriving a transform kernel set of MTS or LFNST, the video signal processing device may also derive the MTS or LFNST transform kernel set without transform to the extended angle mode for the intra prediction mode derived by the DIMD mode.

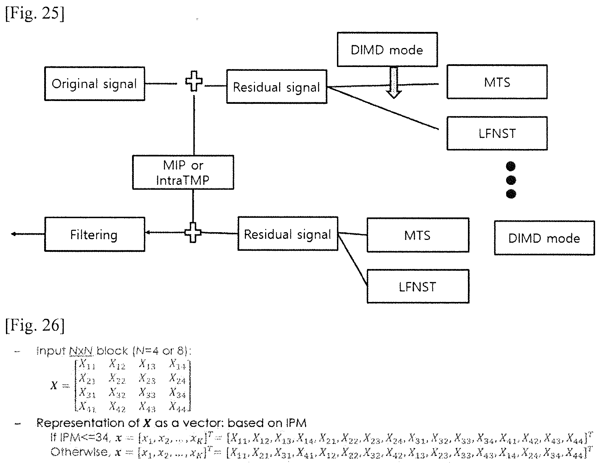

FIG. 25 is a diagram illustrating an encoding/decoding process of a signal related to an MIP and/or intra TMP method according to an embodiment of the disclosure.

The video signal processing device may generate a prediction block of the current block based on the MIP method described through FIGS. 20 to 22. The video signal processing device may generate a prediction block of the current block based on the intra TMP method described through FIG. 23. The video signal processing device may perform a transform process on a residual signal of a prediction block generated based on either the MIP method or the intra TMP method. The transform method for the transform process may be MTS or LFNST. The video signal processing device may derive a transform kernel set for each of the MTS and LFNST. Each kernel set may be composed of multiple kernel candidates. When the MIP method and the intra TMP method are used, the intra prediction mode may not exist. Therefore, in the transform process, the video signal processing device may omit the MTS or LFNST or apply a limited transform kernel set.

If the prediction block of the current block is generated without the intra prediction mode as the MIP method and the intra TMP method are used, the video signal processing device may perform a process of deriving a DIMD mode to apply MTS or LFNST to a block to which the MIP method or the TMP method is applied. The video signal processing device may derive a transform kernel set of MTS or LFNST based on the derived DIMD mode. In order to derive the transform kernel set of MTS or LFNST, the video signal processing device may perform a process of transforming to an extended angle mode. The intra prediction mode derived by the DIMD method may be a mode derived based on surrounding sample information of the current block, and may be angle modes 0 to 67. Therefore, the transform process to the extended angle mode may be omitted for the intra prediction mode derived by the DIMD mode.

During the decoding process, the video signal processing device may perform MTS or LFNST transform on a signal on which inverse quantization has been performed. The video signal processing device may derive a DIMD mode before performing MTS or LFNST transform on a block to which the MIP method or intra TMP method is applied, and may perform MTS or LFNST transform based on the intra prediction mode derived in the DIMD mode. In this case, the transform process to the extended angle mode may be omitted.

The video signal processing device may perform MTS or LFNST transform on a signal on which inverse quantization has been performed. The video signal processing device may derive a DIMD mode before performing MTS or LFNST transform on a block to which the DNID method is applied, and may perform MTS or LFNST transform based on the intra prediction mode derived in the DIMD mode. In this case, the transform process to the extended angle mode may be omitted.

The operations related to the MTS or LFNST transform according to the above-described disclosure may also be applied to a non-separable primary transform (NSPT) other than LFNST. For example, the video signal processing device may derive a transform kernel set for NSPT based on an intra prediction mode derived from the DIMD mode. In addition, the video signal processing device may perform the NSPT transform based on the transform kernel set for NSPT.

FIG. 26 is a diagram illustrating a relationship between an input vector of a secondary transform and an intra prediction mode according to an embodiment of the disclosure.

The secondary transform may be calculated by multiplying the secondary transform kernel matrix and the input vector. The video signal processing device may configure the coefficients in the above-left sub-block of the primarily transformed coefficient block in a vector form. The vector may be configured depending on the intra prediction mode. For example, if the intra prediction mode is a prediction mode corresponding to an index less than or equal to index 34 of FIG. 6, or an INTRA_LT_CCLM, INTRA_T_CCLM, or INTRA_L_CCLM mode that predicts chroma samples by using a linear relationship of chroma, the video signal processing device may horizontally scan the above-left sub-block of the primarily transformed coefficient block to configure the coefficients in a vector form. The element of the $I^{th}$ row and $J^{th}$ column of the above-left n x n block of the primarily transformed coefficient block may be described as $x_{ij}$. In this case, the vectorized coefficients may be expressed as $[x\_00, x\_01, ..., x\_0n{-}1, x\_10, x\_11, ..., x\_1n{-}1, ..., x\_n{-}10, x\_n{-}11, ..., x\_n{-}1n{-}1]$. On the other hand, if the intra prediction mode is a prediction mode corresponding to an index greater than index 34 of FIG. 6, the video signal processing device may vertically scan the above-left sub-block of the primarily transformed coefficient block to configure the coefficients in a vector form. The vectorized coefficients may be expressed as $[x\_00, x\_10, ..., x\_n{-}10, x\_01, x\_11, ..., x\_n{-}11, ..., x\_0n{-}1, x\_1n{-}1, ..., x\_n{-}1n{-}1]$.

Since the secondarily transformed coefficients are in a vector form, they may be expressed as two-dimensional data. The secondarily transformed coefficients according to a preconfigured scan order may be allocated to the above-left sub-block of the transform block. The preconfigured scan order may be an upright diagonal scan order.

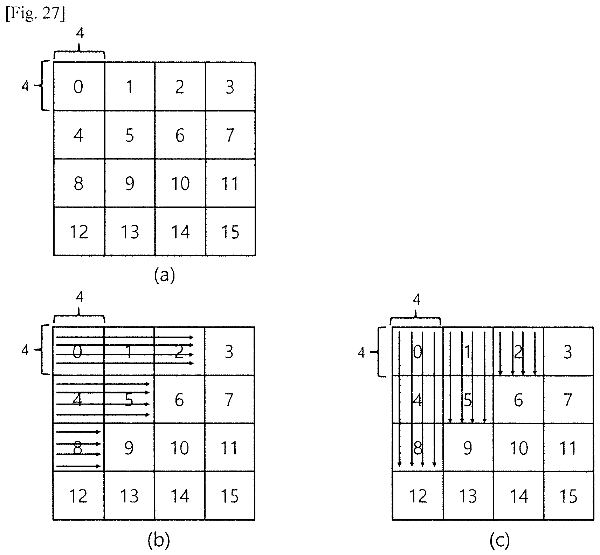

FIG. 27 is a diagram illustrating a method of configuring an input vector of a secondary transform according to an embodiment of the disclosure.

FIG. 27 illustrates a method for using the forward primary transform coefficients as the input vector of the forward LFNST. As described in FIG. 14, the method described in FIG. 26 may be applied to use the forward primary transform coefficients as the input vector of the forward LFNST. Referring to FIG. 27, the ROI of LFNST16 may correspond to six 4×4 sub-blocks (refer to FIGS. 27B and 27C). A total of 96 primary transform coefficients may be used, and the matrix of the transform kernel of LFNST16 may be 32×96. A total of 96 transform coefficients may be configured in the form of an input vector of 96×1.

Referring to FIG. 27A, the current block may be composed of 16 4×4 sub-blocks, and each sub-block may be mapped to an index of 0 to 15, respectively. In this case, the ROI of LFNST16 may be an area corresponding to a sub-block corresponding to indices 0, 4, 8, 1, 5, and 2.

Referring to FIG. 27B, a horizontal (transverse) direction scan order may be used for input vector configuration. That is, the video signal processing device may scan the transform coefficients in the order of sub-blocks corresponding to indices 0, 1, 2, 4, 5, and 8. In other words, 12 samples of the first row may be scanned in the horizontal direction of the sub-blocks of consecutive indices 0, 1, and 2, 12 samples of the second row may be scanned, 12 samples of the third row may be scanned, and then 12 samples of the fourth row may be scanned. In addition, 4 samples of each of the fifth to eighth rows of the sub-blocks of consecutive indices 4 and 5 may be scanned in the horizontal direction. In addition, 4 samples of each of the ninth to twelfth rows of the sub-blocks of index 8 may be scanned in the horizontal direction. If the encoding mode of the current block is an intra prediction mode corresponding to an index greater than the intra prediction mode of index 34, the input vector may be configured according to the vertical (longitudinal) scan order as shown in FIG. 27C. That is, the video signal processing device may configure the input vector by scanning the transform coefficients in the order of sub-blocks corresponding to 0, 4, 8, 1, 5, and 2.

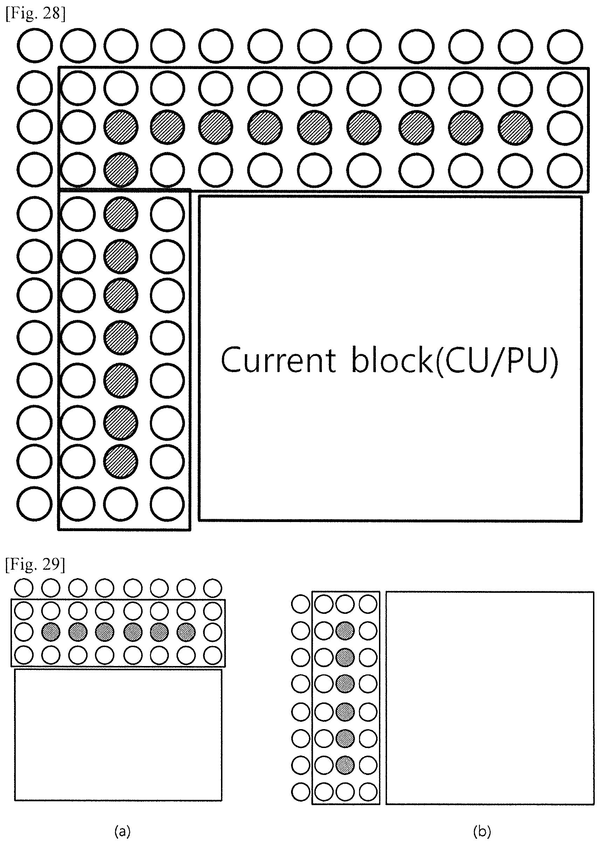

FIG. 28 is a diagram illustrating a process of deriving directional information of a template of a current block for intra template matching according to an embodiment of the disclosure.

The process of deriving the directional information of the template of the current block for intra template matching may be applied to each color component (i.e., luma component and chroma (Cb, Cr) component) of the current block. Alternatively, the process of deriving the directional information of the template of the current block for intra template matching may be applied to one of the chroma components (Cb or Cr), and the result of the derivation process may be used for the remaining chroma components. The size of the template of the current block for intra template matching may be 4. The video signal processing device may derive intra prediction directional information by using the method described in FIGS. 17 and 18 for the template. The video signal processing device may apply a Sobel filter to a 3 x 3 unit template. The video signal processing device may represent the derived intra prediction directional information (mode) in the form of a histogram and sort the same in order of high frequency. Alternatively, the video signal processing device may derive intra prediction directional information by using a template of a matching block found by template matching in the search area instead of the current block.

FIG. 29 is a diagram illustrating a template form for deriving intra prediction directional information according to an embodiment of the disclosure.

The method for deriving intra prediction directional information as described herein may be described as a DIMD method.

FIG. 29A illustrates a template located above the current block for deriving intra prediction directional information. The video signal processing device may derive intra prediction directional information by using only the template located above the current block. FIG. 29B illustrates a template located on the left side of the current block for deriving intra prediction directional information. The video signal processing device may derive intra prediction directional information by using only the template located on the left side of the current block. The intra prediction directional information derived based on the templates illustrated in FIGS. 28 and 29 may be used as an intra prediction mode. The video signal processing device may apply MTS to the intra template matching block based on the intra prediction mode. In addition, the video signal processing device may also apply LFNST to the intra template matching block based on the intra prediction mode. The derived intra prediction directional information may be obtained for each color component. That is, the intra prediction directional information may be derived for each luma and chroma. The video signal processing device may derive MTS and LFNST kernel sets for each color component, and may also derive multiple kernel sets. In this case, the video signal processing device may derive intra prediction directional information for only one of the Cb and Cr components. In a block to which intra block matching is applied, MTS and LFNST may not be used or limited MTS and LFNST may be applied because there is no intra prediction mode information. The intra prediction directional information derived by the video signal processing device may be multiple. The video signal processing device may determine intra prediction directional information with a large coding gain by applying MTS or LFNST to multiple pieces of intra prediction directional information, and may derive a kernel set based on the determined intra prediction directional information. In addition, the video signal processing device may signal the kernel candidates within the derived kernel set. For example, the encoder may generate a bitstream including syntax elements mts_idx and/or lfnst_idx indicating the kernel candidates. The decoder may determine the kernel candidates by parsing the mts_idx and/or lfnst_idx included in the bitstream. The video signal processing device may derive the MTS or LFNST kernel set for one of the highest frequency modes. The mts_idx and lfnst_idx may be parsed by color components (e.g., Y, Cb, Cr) or by luma and chroma components.

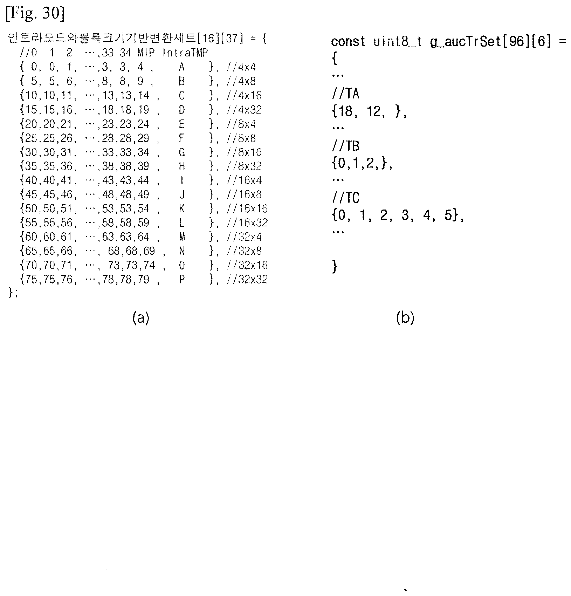

FIG. 30 is a diagram illustrating an MTS set applied to an intra template matching block according to an embodiment of the disclosure.

In a typical intra template matching block, there may be no intra prediction information. Therefore, the video signal processing device may configure and use the MTS set and the kernel type for each set according to the size of the prediction block of the current block. For example, the block size may be 4x4, 4x8, 4x16, 4x32, 8x4, 8x8, 8x16, 8x32, 16x4, 16x8, 16x16, 16x32, 32x4, 32x8, 32x16, and 32x32. In addition, in the case where the block size is larger than 32, it may be extended to, for example, a case where the width or height is 64. Referring to FIG. 30A, a transform set for an intra template matching block may be configured for each block size. The transform set may be an additional form to the existing intra mode and block size-based transform set. FIG. 30B illustrates some of the kernel candidates configured for each transform set. The number of transform kernel candidates configured for each transform set may be 4 or 6. The transform kernel candidate may be indicated among the transform kernel combinations of Table 1 described above. The video signal processing device may find a transform kernel candidate suitable for intra template block matching through an experiment.

Since the intra template matching method has the characteristics of the inter prediction mode, the MTS method based on the inter prediction mode may be applied to the MTS method to be applied to the intra template matching block. For example, the encoder may generate a bitstream including index information on the optimal transform set for the block to which the intra template matching is applied. In this case, the optimal transform set may be one of {(DST7, DST7), (DST7, DCT8), (DCT8, DST7), (DCT8, DCT8)}. The decoder may determine the transform set for the current block based on the optimal transform set determined by parsing the index information included in the bitstream.

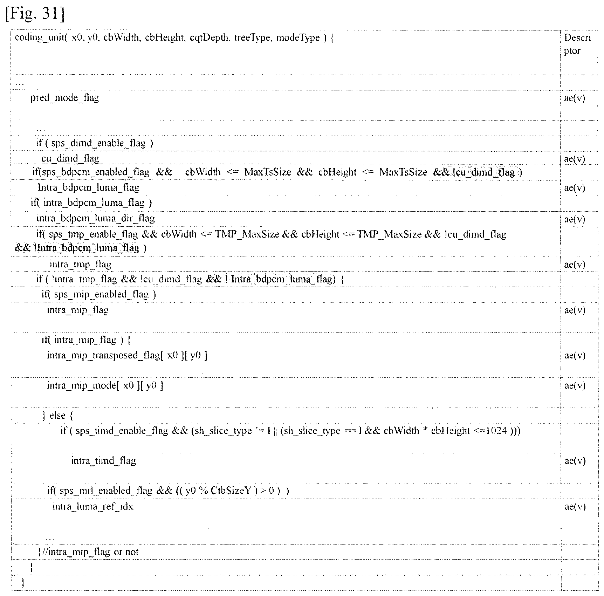

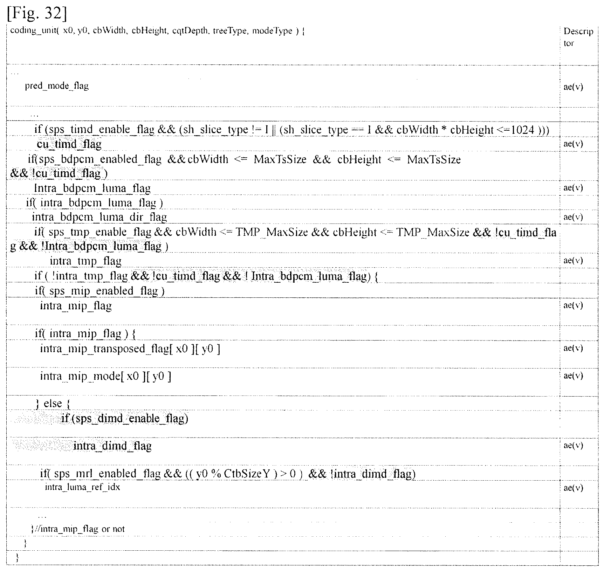

FIGS. 31 and 32 are diagrams illustrating a syntax structure including a flag indicating whether intra template matching is applied according to an embodiment of the disclosure.

Referring to FIG. 31, a flag (syntax element) indicating whether intra template matching is applied to the current block may be included in the coding unit syntax structure. The flag indicating the intra prediction method may be signaled and/or parsed in the order of indicating DIMD, BDPCM, Intra TMP, MIP, TIMD, MRL, ISP, and MPM. First, the video signal processing device may parse and/or signal a flag (cu_dimd_flag) indicating whether DIMD is applied. The video signal processing device may parse and/or signal a flag (intra_bdpcm_luma_flag) indicating whether BDPCM is applied to the luma component when the value of cu_dimd_flag is 0 (when DIMD is not applied). The video signal processing device may parse and/or signal a flag (intra_tmp_flag) indicating whether Intra TMP is applied when the values of both cu_dimd_flag and intra_bdpcm_luma_flag are 0 (DIMD is not applied and BDPCM is not applied). The flags after intra_mip_flag may be parsed and/or signaled when the values of cu_dimd_flag, intra_bdpcm_luma_flag, and intra_tmp_flag are all 0.

Referring to FIG. 32, a flag indicating the intra prediction method for the current block may be signaled and/or parsed in the order of TIMD, BDPCM, Intra TMP, MIP, DIMD, MRL, ISP, and MPM. The video signal processing device may parse and/or signal the flag (cu_timd_flag) indicating whether TIMD is applied. The video signal processing device may parse and/or signal intra_bdpcm_luma_flag when the value of cu_timd_flag is 0 (when TIMD is not applied). The video signal processing device may parse and/or signal intra_tmp_flag when the values of both cu_timd_flag and intra_bdpcm_luma_flag are 0. The flags after intra_mip_flag may be parsed and/or signaled when the values of cu_timd_flag, intra_bdpcm_luma_flag, and intra_tmp_flag are all 0. The video signal processing device may signal and/or parse the syntax element (intra_luma_ref_idx) indicating whether the multi-reference line (MRL) is applied only when the value of the flag (intra_dimd_flag) indicating whether DIMD is applied to the current block (e.g., prediction block) is 0 (when DIMD is not applied).

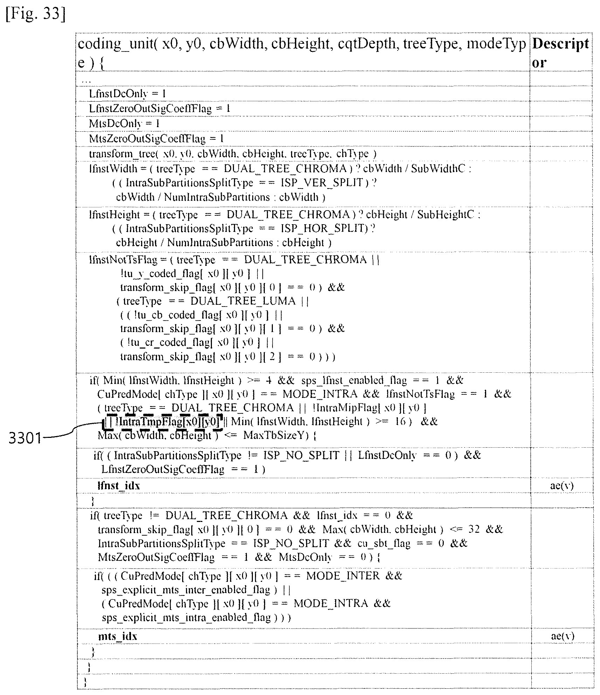

FIG. 33 is a diagram illustrating a syntax structure showing a method of parsing a syntax element indicating whether LFNST is applied.

Referring to FIG. 33, the syntax element (lfnst_idx) indicating whether LFNST is applied to the current block may be parsed (3301 in FIG. 33) when IntraTmp is applied (when the value of IntraTmpFlag[x0][y0] is not 0). The variable IntraTmpFlag[ x ][ y ] may be configured to the value of intra_tmp_flag. In IntraTmpFlag[ x ][ y ], x may be x0...x0 + cbWidth - 1, and y may be y0...y0 + cbHeight - 1. The effect of LFNST may be relatively small in the coding block to which intra template matching is applied. Whether LFNST is applied may be determined not only for the luma component block but also for the chroma component block. In this case, when determining whether LFNST is applied to the chroma component block, Cb and Cr may be determined commonly or individually. When indicating whether LFNST is applied to a chroma component block, a variable (channel type variable) indicating a color component may be additionally included. For example, IntraTmpFlag[ x ][ y ] may be expressed in the form of IntraTmpFlag[channel type variable][ x ][ y ], and lfnst_idx may be expressed in the form of lfnst_idx[channel type variable]. In addition, the syntax element indicating whether LFNST is applied may be parsed based on the block size for each color component.

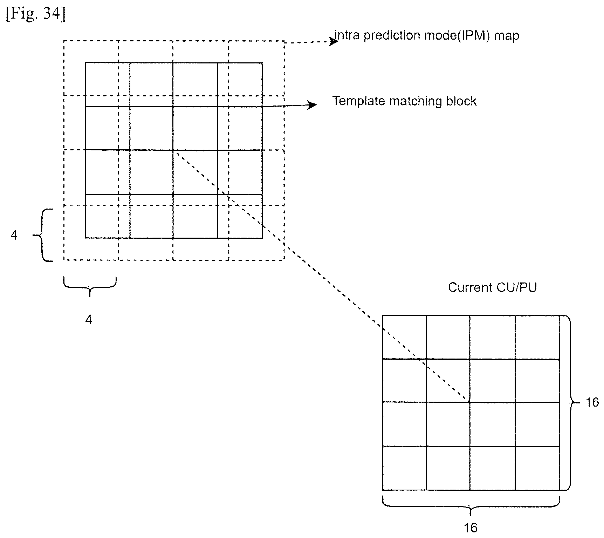

FIG. 34 is a diagram illustrating intra propagation of an intra template matching block according to an embodiment of the disclosure.

Since the block to which intra template block matching is applied does not have intra prediction mode information, one of the preconfigured intra prediction modes may be stored in the intra prediction mode map. The preconfigured intra prediction modes may be a planar mode, a DC mode, and an angular mode. The intra prediction mode may be applied to the intra prediction mode map in units of 4 x 4. The intra prediction mode stored in the intra prediction mode map may be used when the video signal processing device configures the MPM list of the current prediction block. The video signal processing device may store the intra prediction mode map information of the template matching block in the intra prediction mode map of the current block. If the location of the template matching block and the intra prediction mode map do not match, the video signal processing device may store the intra prediction mode map information of the location where the preconfigured location of the template matching block of 4 x 4 units is included in the intra prediction mode map of the current block. The preconfigured location may be one of the corners of the block of 4 x 4 units or the center of the block.

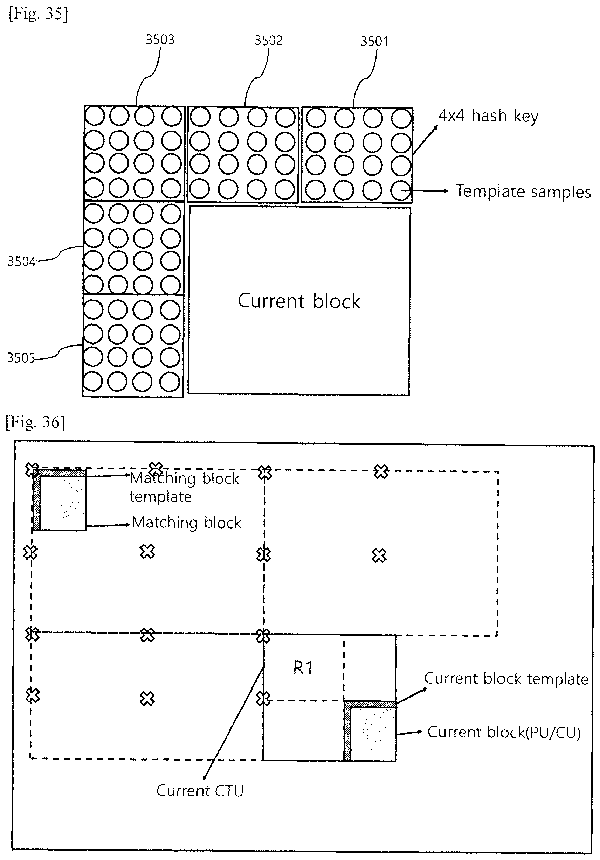

FIG. 35 is a diagram illustrating a method of applying a hash key according to a method of searching for an intra template matching block according to an embodiment of the disclosure.

The video signal processing device may search for a hash key-based template matching block. The video signal processing device may perform a hash key (32-bit CRC (cyclical redundancy check)) matching between the template of the current block and the template of the template matching block for all template sizes to which the intra template matching block is applied. The hash key may be calculated in units of 4 x 4 blocks (sub-blocks). The video signal processing device may identify whether the hash key of the template of the current block and the hash key of the template of the template matching block match for hash key matching of a template block larger than 4 x 4. Specifically, the video signal processing device may identify whether the hash key of the template of the current block and the hash key of each of the templates of all 4 x 4 blocks (sub-blocks, 3501 to 3505 of FIG. 35) of the template matching block match. The video signal processing device may calculate the cost for templates of the template matching block in which the template of the current block and hash key match, and determine the block corresponding to the template corresponding to the minimum cost as the prediction block of the current block. That is, the video signal processing device may calculate the similarity (cost) between the template of one or more template matching blocks in which the template of the current block and hash key match and the template of the current block to determine the block corresponding to the template with the highest similarity (minimum cost) as the prediction block of the current block. The video signal processing device may perform the search in 4 x 4 units within the search section of FIG. 23.

FIG. 36 is a diagram illustrating a preconfigured location for searching for an intra template matching block according to an embodiment of the disclosure.

The search area for intra template matching block search may be 4 CTU size. The video signal processing device may calculate the cost between the template of the preconfigured location (e.g., x part of FIG. 36) of the search area and the template of the current block to determine the block of the location corresponding to the smallest cost as the matching block. The preconfigured location may be determined equally or unequally. For example, if the preconfigured location is determined equally, it may be determined in multiples of 2 or 4, and if it is determined unequally, the location may be preconfigured. Referring to FIG. 36, the preconfigured location included in R1 corresponding to the current CTU may be a reconstructed area.

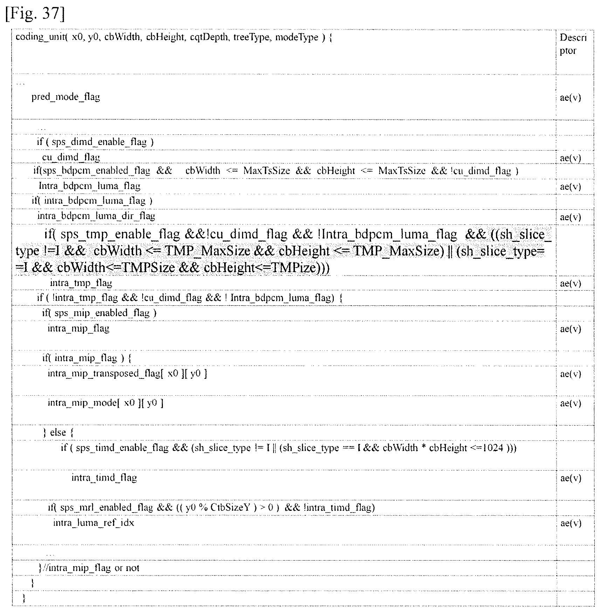

FIG. 37 is a diagram illustrating a coding unit syntax structure according to an embodiment of the disclosure.

The syntax elements in the syntax structure of FIG. 37 may be the same as the syntax elements illustrated in FIGS. 31 to 33. Referring to FIG. 37, a flag (intra_tmp_flag) indicating whether Intra TMP is applied may be parsed and signaled based on the maximum size of the intra template matching block. The maximum size of the intra template matching block may be configured for each slice type. Alternatively, the maximum size of the intra template matching block may be configured for each color component (Y, Cb, Cr), and may be set for each chroma component and luma component. For example, if the slice type is I-slice, the width (cbWidth) of the current block (i.e., coding block) is less than or equal to the maximum block size (TMPSize) to which template matching may be applied, and the height (cbHeight) of the current block may be less than or equal to the TMP size (i.e., cbWidth <= TMPSize, cbHeight <= TMPSize). If the slice type is not I-slice, the width of the current block is less than or equal to the TMP maximum size (TMP_MaxSize), and the height of the current block may be less than or equal to the TMP maximum size (cbWidth <= TMP_MaxSize, cbHeight <= TMP_MaxSize). TMP_MaxSize may be 64, or one of 16, 32, 128, and 256. TMPSize may be less than TMP_MaxSize. If TMP_MaxSize does not exist, TMPSize may be configured to an integer that does not exceed the CTU size. Hereinafter, the parsing condition of Intra_tmp_flag is described.

(Condition 1)

(sps_tmp_enable_flag && !cu_dimd_flag && ((sh_slice_type !=I && cbWidth <= TMP_MaxSize && cbHeight <= TMP_MaxSize) ‖ (sh_slice_type==I && cbWidth<=TMPSize && cbHeight<=TMPSize)))

If Condition 1 is satisfied, intra_tmp_flag may be parsed. The sps_tmp_enable_flag is a syntax element that indicates whether intra TMP is enabled and may be signaled at the SPS level. If the value of sps_tmp_enable_flag is 1, it may indicate that intra TMP is enabled, and if the value of sps_tmp_enable_flag is 0, it may indicate that intra TMP is disabled. According to Condition 1, i) sps_tmp_enable_flag indicates that intra TMP is enabled, ii) cu_dimd_flag indicates that DIMD is not applied, and iii) if the slice type is I-slice, the width and height of the current block are less than or equal to the TMP size (TMPSize), or if the slice type is not I-slice, the width of the current block is less than or equal to the TMP maximum size (TMP_MaxSize), intra_tmp_flag may be parsed.

The !cu_dimd_flag in Condition 1 may or may not be included depending on the syntax structure.

(Condition 2)

(sps_tmp_enable_flag && !cu_dimd_flag && !Intra_bdpcm_luma_flag && ((sh_slice_type !=I && cbWidth <= TMP_MaxSize && cbHeight <= TMP_MaxSize) || (sh_slice_type==I && cbWidth<=TMPSize && cbHeight<=TMPSize)))

If Condition 2 is satisfied, intra_tmp_flag may be parsed. Condition 2 may be an additional condition for !Intra_bdpcm_luma_flag to Condition 1. According to Condition 2, in addition to i) to iii) of Condition 1, iv) if BDPCM is not applied, intra_tmp_flag may be parsed.

The intra_tmp_flag, TMP_MaxSize, and TMPSize may be configured individually for each color component (Y, Cb, Cr) or for each luma and chroma.

Since the block to which intra template matching is applied has the characteristics of the inter prediction mode, when determining the filtering strength (bS) of the boundary part in deblocking filtering, a method of determining the filtering strength in the inter prediction mode may be used. For example, in the process of determining the filtering strength, if intra template matching is applied to either of the p and q blocks, the filtering strength for the boundary between the p and q blocks may be configured to 1. The larger filtering strength, the stronger filtering, and a filtering strength of 0 may mean that no filtering is performed. For example, a filtering strength of 1 (weak filtering) may mean weaker filtering than a filtering strength of 2 (strong filtering). Strong filtering may change an arbitrary number or more of pixel values around the boundary between the p and q blocks, and weak filtering may change an arbitrary number or fewer of pixel values. The arbitrary number may be an integer of 6. Alternatively, if intra template matching is applied to both p and q blocks, the filtering strength may be determined based on the difference in block vectors between p and q blocks. For example, in the process of determining the filtering strength, if intra template matching is applied to both p and q blocks, and the difference in block vectors between p and q blocks is greater than an arbitrary predetermined number, the filtering strength for the boundary between p and q blocks may be configured to 1. In this case, the arbitrary predetermined number may be an integer of 1.

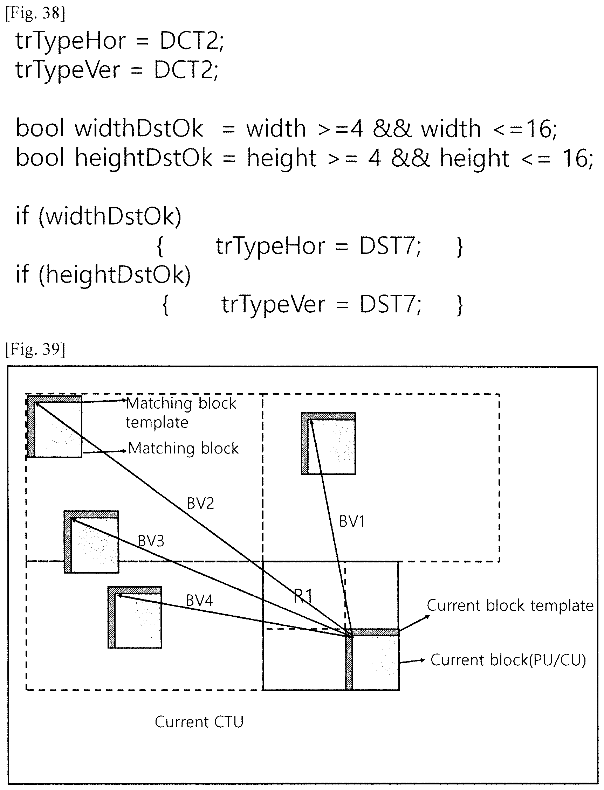

FIG. 38 is a diagram illustrating a method of selecting a transform set for a block to which an intra TMP is applied according to an embodiment of the disclosure.

The width and height of the block to which the intra TMP is applied may be limited. For example, the width and height of the block to which the intra TMP is applied may be 64, respectively. The horizontal direction transform kernel for the block to which the intra TMP is applied may be DCT2, and the vertical direction transform kernel may be DCT2. If the width of the block to which the intra TMP is applied satisfies a specific condition, the horizontal direction transform kernel may be DST7. If the height of the block to which the intra TMP is applied satisfies a specific condition, the vertical direction transform kernel may be DST7. On the other hand, if the width of the block to which the intra TMP is applied does not satisfy a specific condition, the horizontal direction transform kernel may be DST2, and if the height of the block to which the intra TMP is applied does not satisfy a specific condition, the vertical direction transform kernel may be DST2. The specific condition may be that the width (or height) of the block to which the intra TMP is applied is greater than or equal to 4 and less than or equal to 16. The video signal processing device may determine an MTS set for the block to which the intra TMP is applied. The MTS set may be determined by using an intra prediction mode derived by the DIMD method. The video signal processing device may calculate costs for transform kernel candidates constituting the determined MTS set, and use the transform kernel candidate corresponding to the smallest cost. The method described through FIG. 38 may be applied to blocks except for the case where the width (or height) of the block to which the intra TMP is applied is greater than or equal to 4 and less than or equal to 16. That is, the method described through FIG. 38 may be applied to blocks corresponding to the case where the width (or height) of the block to which the intra TMP is applied is less than 4 or greater than 16. In this case, the parsing condition of the MTS index indicating the transform kernel candidate included in the bitstream is as follows.

(Condition 1)

Cu.IntraTmpFlag && Width > First reference value && Height > Second reference value

If the flag (Cu.IntraTmpFlag) indicating whether the current block (e.g., coding block, transform block) is applied with intra TMP is true (the value is 1, indicating that intra TMP is applied), the width of the current block is greater than the first reference value, and the height of the current block is greater than the second reference value, the MTS index may be parsed. The first reference value and the second reference value of Condition 1 may be a preset value of 16. In addition, the first reference value and the second reference value may be configured to different values, and the first reference value and the second reference value may be any one of 4, 8, 16, 32, etc.

Meanwhile, the video signal processing device may determine the MTS set for all blocks to which the intra TMP is applied regardless of the specific condition of FIG. 32. The MTS set may be determined by using the intra prediction mode derived by the DIMD method. The video signal processing device may determine a specific transform kernel to be used based on the cost for the transform kernel included in the determined MTS set. In this case, the parsing condition of the MTS index indicating the specific transform kernel included in the bitstream is as follows.

(Condition 2)

Cu.IntraTmpFlag && Width<=Third Reference Value && Height<=Fourth Reference Value

If Cu.IntraTmpFlag is true and the width of the current block is less than or equal to the third reference value, and the height of the current block is less than or equal to the fourth reference value, the MTS index may be parsed. The third reference value and the fourth reference value may be 64. In addition, the third reference value and the fourth reference value may be equal to the maximum size to which the intra TMP may be applied. In addition, the third reference value and the fourth reference value may be different values. The condition for parsing the LFNST index representing the kernel for the LFNST may also be the same as Condition 2.

Alternatively, the video signal processing device may parse the MTS index based on a specific kernel set. In this case, intra prediction mode information may not be required. The specific kernel set may be 4 to 6 kernel candidates. The kernel candidates in this case may be configured as illustrated in Table 1.

FIG. 39 is a diagram illustrating a plurality of block vectors for an intra TMP block according to an embodiment of the disclosure.

The video signal processing device may calculate the cost between the template of the preconfigured location for intra template matching block search and the template of the current block, and calculate (obtain) a block vector (motion vector) for the template for intra template matching block search corresponding to the smallest cost. The video signal processing device may sort and store block vectors in order of low cost. The cost may be calculated by using the template of the current block and the template of the reference block (the device is a template at a preconfigured location for intra template matching block search) samples by using sum of absolute differences (SAD), mean removed-sum of absolute differences (MR-SAD), and sum of absolute transformed differences (SATD). The block vector (motion vector) may be expressed in integer pixel units, 1/2, 1/4, 1/8, 2, and 4 pixel units. Among the obtained block vectors, actually used block vector may be the first (or last) vector, and the rest of the block vectors may be sorted and stored in the order of small cost. The stored block vectors may be used as motion vector candidates for the IBC coding block. If a block to which intra TMP is applied exists in a neighboring block of the IBC coding block, the video signal processing device may use the stored block vectors.

One intra TMP block may be predicted through a combination of multiple intra TMP blocks. In this case, the video signal processing device may store block vectors of reference blocks used for combining. In this case, the combined reference blocks may be two or more blocks. The video signal processing device may store as many block vectors as the number of combined reference blocks and block vectors obtained through the above-described cost calculation. If only the block vector of the reference block used for the combining is used, the video signal processing device may use weight combining. The video signal processing device may determine a storage order of the block vector based on the weight. When the block vectors stored for the IBC coding block are used, the video signal processing device may determine the order of motion candidates for the IBC coding block based on the storage order of the block vectors. For example, a block vector with a large weight may have a high priority. When the block vectors of the reference block to be combined and the block vectors obtained through cost calculation are stored together, the block vector of the reference block to be combined may have a high priority.

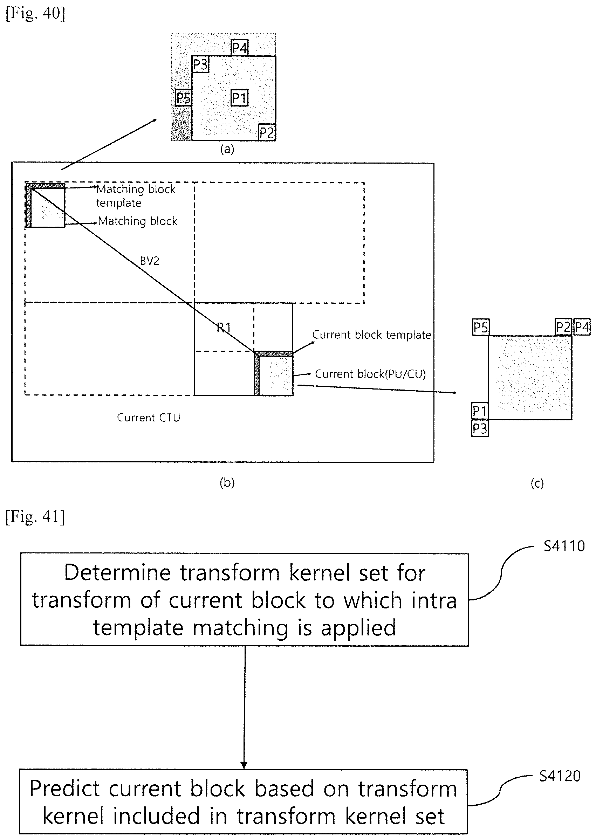

FIG. 40 is a diagram illustrating a method of deriving an intra prediction mode of a block to which an intra TMP is applied according to an embodiment of the disclosure.

Specifically, FIG. 40 shows a method of deriving an intra prediction mode required to apply MTS and LFNST to a block to which an intra TMP is applied. The video signal processing device may determine an intra prediction mode for a block to which an intra TMP is applied based on an intra prediction mode stored at a preconfigured location within a reference block of the current block and an intra prediction mode stored at a preconfigured location within a surrounding (neighboring) block of the reference block. Meanwhile, if the samples at the preconfigured location are in MIP mode, intra TMP mode, IBC mode, palette mode, or intra mode, the video signal processing device may not use the intra prediction mode stored at the preconfigured location. FIG. 40A may be an enlarged drawing of the reference block (matching block) of FIG. 40B. Referring to FIG. 40A, there may be five preconfigured locations for the video signal processing device to identify the intra prediction mode of the matching block. For example, there may be three preconfigured locations (P1 to P3) within the reference block, and there may be two preconfigured locations (P4 to P5) within the surrounding blocks of the reference block. Specifically, the preconfigured locations may be P1 (center), P2 (below-right), P3 (above-left), P4 (among the neighboring blocks of the reference block adjacent to the above boundary of the reference block, a block adjacent to the center block among the blocks of the above boundary of the current block), and P5 (among the neighboring blocks adjacent to the left boundary of the reference block, a block adjacent to the center block among the blocks of the left boundary of the current block). In FIG. 40A, five preconfigured locations are illustrated for convenience of description, but the disclosure is not limited thereto. Meanwhile, an intra prediction mode may not exist at a preconfigured location. In this case, the video signal processing device may configure and use the preconfigured mode as an intra prediction mode. The preconfigured mode may be one of a planar mode, a DC mode, a horizontal angle mode, a vertical angle mode, a diagonal angle mode, and an angle mode. In addition, if there is no intra prediction mode at a preconfigured location, the video signal processing device may derive the intra prediction mode by using a template as shown in FIG. 28. In addition, the video signal processing device may derive an intra prediction mode by using all or part of the samples in the reference block. The video signal processing device may use the derived intra prediction mode to determine the MTS set or LFNST set of the current block to which the intra TMP is applied.

In addition, the video signal processing device may use the intra prediction mode of the preconfigured location of the neighboring block of the current block as shown in FIG. 40C. Referring to FIG. 40C, the video signal processing device may use the intra prediction mode of five preconfigured locations to determine the MTS set or the LFNST set. For example, if the location of the above-left block of the current block is (0, 0), the preconfigured locations of the neighboring blocks of the current block may be P1(-1, H-1), P2(W-1, -1), P3(-1, H), P4(W, -1), and P5(-1, 0). In this case, H may be the height of the current block, and W may be the width of the current block. Meanwhile, if there is no intra prediction mode at a preconfigured location, the video signal processing device may use one of the above-described preconfigured modes or use a template sample located in the neighborhood of the current block to derive the intra prediction mode.

In addition, the video signal processing device may identify whether there is an intra prediction mode stored in a preconfigured location within the reference block of the current block and an intra prediction mode stored in a preconfigured location within the surrounding blocks of the reference block, and if there is no stored intra prediction mode, the video signal processing device may identify whether there is an intra prediction mode in a preconfigured location of a neighboring block of the current block. If there is no intra prediction mode at a preconfigured location of a neighboring block of the current block, the video signal processing device may derive the intra prediction mode by using one of the preconfigured modes described above or by using a template sample (by using DIMD) located in the neighborhood of the current block (using DIMD).

The video signal processing device may identify the intra prediction mode by scanning the preconfigured locations (P1 to P5) shown in each of FIGS. 40A and 40C in the order of P1, P2, P3, P4, and P5. The video signal processing device may determine the MTS set or LFNST set by using the first identified intra prediction mode while performing the scan on P1 to P5.

The method described with reference to FIG. 40 may also be applied to the block to which the IBC mode is applied. That is, the video signal processing device may derive the intra prediction mode required to apply MTS and LFNST to the block to which the IBC mode is applied.

FIG. 41 illustrates a method for determining an MTS set or an LFNST set according to an embodiment of the disclosure.

FIG. 41 illustrates a method of deriving an intra prediction mode to determine an MTS set or an LFNST set for the intra TMP block described through FIGS. 1 to 40.

Referring to FIG. 41, a video signal decoding device may determine a transform kernel set for transformation of a current block to which intra template matching is applied (S4110). The video signal decoding device may predict the current block based on a transform kernel included in the transform kernel set (S4120). The transform kernel set may be determined based on an intra prediction mode related to the current block.

The transform kernel set may be at least one of a set of transform matrices of a multiple transform set (MTS), a set of transform matrices of a low frequency non-separable transform (LFNST), and/or a set of transform matrices of different types of a non-separable primary transform.

The intra prediction mode may be derived based on decoder side intra mode derivation (DIMD).

The intra prediction mode may be derived based on an intra prediction mode of a preconfigured location within a reference block of the current block and an intra prediction mode of a neighboring block of the reference block.

The preconfigured locations within the reference block may be above-left, below-right, and center of the current block, and the neighboring block of the reference block may be a block adjacent to the center block among the blocks of the above boundary of the current block from among the neighboring blocks of the reference block adjacent to the above boundary of the reference block and a block adjacent to the center block among the blocks of the left boundary of the current block from among the neighboring blocks adjacent to the left boundary of the reference block.

The intra prediction mode may be derived based on an intra prediction mode of a neighboring block of the current block.

The neighboring blocks of the current block may be blocks located at (-1, H-1), (W-1, -1), (-1, H), (W, -1), (-1, 0), and the H may be the height of the current block, the W may be the width of the current block, and the location of above-left block of the current block may be (0, 0).

When an intra prediction mode of a preconfigured location within the reference block of the current block and an intra prediction mode of the neighboring block of the reference block do not exist, the intra prediction mode may be derived based on decoder side intra mode derivation (DIMD). The above methods described in the present specification may be performed by a processor in a decoder or an encoder. Furthermore, the encoder may generate a bitstream that is decoded by a video signal processing method. Furthermore, the bitstream generated by the encoder may be stored in a computer-readable non-transitory storage medium (recording medium).

The present specification has been described primarily from the perspective of a decoder, but may function equally in an encoder. The term "parsing" in the present specification has been described in terms of the process of obtaining information from a bitstream, but in terms of the encoder, may be interpreted as configuring the information in a bitstream. Thus, the term "parsing" is not limited to operations of the decoder, but may also be interpreted as the act of configuring a bitstream in the encoder. Furthermore, the bitstream may be configured to be stored in a computer-readable recording medium.

The above-described embodiments of the present invention may be implemented through various means. For example, embodiments of the present invention may be implemented by hardware, firmware, software, or a combination thereof.

For implementation by hardware, the method according to embodiments of the present invention may be implemented by one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, and the like.

In the case of implementation by firmware or software, the method according to embodiments of the present invention may be implemented in the form of a module, procedure, or function that performs the functions or operations described above. The software code may be stored in memory and driven by a processor. The memory may be located inside or outside the processor, and may exchange data with the processor by various means already known.

Some embodiments may also be implemented in the form of a recording medium including computer-executable instructions such as a program module that is executed by a computer. Computer-readable media may be any available media that may be accessed by a computer, and may include all volatile, nonvolatile, removable, and non-removable media. In addition, the computer-readable media may include both computer storage media and communication media. The computer storage media include all volatile, nonvolatile, removable, and non-removable media implemented in any method or technology for storing information such as computer-readable instructions, data structures, program modules, or other data. Typically, the communication media include computer-readable instructions, other data of modulated data signals such as data structures or program modules, or other transmission mechanisms, and include any information transfer media.

The above-mentioned description of the present invention is for illustrative purposes only, and it will be understood that those of ordinary skill in the art to which the present invention belongs may make changes to the present invention without altering the technical ideas or essential characteristics of the present invention and the invention may be easily modified in other specific forms. Therefore, the embodiments described above are illustrative and are not restricted in all aspects. For example, each component described as a single entity may be distributed and implemented, and likewise, components described as being distributed may also be implemented in an associated fashion.

The scope of the present invention is defined by the appended claims rather than the above detailed description, and all changes or modifications derived from the meaning and range of the appended claims and equivalents thereof are to be interpreted as being included within the scope of present invention.

**Claims**

1. A video signal decoding device comprising a processor,
   wherein the processor is configured to:

   determine a transform kernel set for transformation of a current block to which intra template matching is applied; and
   predict the current block based on a transform kernel included in the transform kernel set, and
   wherein the transform kernel set is determined based on an intra prediction mode related to the current block.

2. The video signal decoding device of claim 1,
   wherein the transform kernel set is at least one of a set of transform matrices of a multiple transform set (MTS), a set of transform matrices of a low frequency non-separable transform (LFNST), and/or a set of transform matrices of a non-separable primary transform.

3. The video signal decoding device of claim 1,
   wherein the intra prediction mode is derived based on decoder side intra mode derivation (DIMD).

4. The video signal decoding device of claim 1,
wherein the intra prediction mode is derived based on an intra prediction mode of a preconfigured location within a reference block of the current block and an intra prediction mode of a neighboring block of the reference block.

5. The video signal decoding device of claim 4,

wherein the preconfigured locations within the reference block are above-left, below-right, and center of the current block, and
wherein the neighboring block of the reference block is a block adjacent to the center block among the blocks of the above boundary of the current block from among the neighboring blocks of the reference block adjacent to the above boundary of the reference block and a block adjacent to the center block among the blocks of the left boundary of the current block from among the neighboring blocks adjacent to the left boundary of the reference block.

6. The video signal decoding device of claim 1,
wherein the intra prediction mode is derived based on an intra prediction mode of a neighboring block of the current block.

7. The video signal decoding device of claim 6,

wherein the neighboring blocks of the current block are blocks located at (-1, H-1), (W-1, -1), (-1, H), (W, -1), (-1, 0), and
wherein the H is the height of the current block, the W is the width of the current block, and the location of above-left block of the current block is (0, 0).

8. The video signal decoding device of claim 4,
wherein, when an intra prediction mode of a preconfigured location within the reference block of the current block and an intra prediction mode of the neighboring block of the reference block do not exist, the intra prediction mode is derived based on decoder side intra mode derivation (DIMD).

9. A video signal encoding device comprising a processor,

wherein the processor is configured to obtain a bitstream decoded by a decoding method,
wherein the decoding method comprises:

determining a transform kernel set for transformation of a current block to which intra template matching is applied; and
predicting the current block based on a transform kernel included in the transform kernel set, and
wherein the transform kernel set is determined based on an intra prediction mode related to the current block.

10. The video signal encoding device of claim 9,
wherein the transform kernel set is at least one of a set of transform matrices of a multiple transform set (MTS), a set of transform matrices of a low frequency non-separable transform (LFNST), and/or a set of transform matrices of a non-separable primary transform.

11. The video signal encoding device of claim 9,
wherein the intra prediction mode is derived based on decoder side intra mode derivation (DIMD).

12. The video signal encoding device of claim 9,
wherein the intra prediction mode is derived based on an intra prediction mode of a preconfigured location within a reference block of the current block and an intra prediction mode of a neighboring block of the reference block.

13. The video signal encoding device of claim 12,

wherein the preconfigured locations within the reference block are above-left, below-right, and center of the current block, and
wherein the neighboring block of the reference block is a block adjacent to the center block among the blocks of the above boundary of the current block from among the neighboring blocks of the reference block adjacent to the above boundary of the reference block and a block adjacent to the center block among the blocks of the left boundary of the current block from among the neighboring blocks adjacent to the left boundary of the reference block.

14. The video signal encoding device of claim 9,
wherein the intra prediction mode is derived based on an intra prediction mode of a neighboring block of the current block.

15. The video signal encoding device of claim 14,

wherein the neighboring blocks of the current block are blocks located at (-1, H-1), (W-1, -1), (-1, H), (W, -1), (-1, 0), and
wherein the H is the height of the current block, the W is the width of the current block, and the location of above-left block of the current block is (0, 0).

16. The video signal encoding device of claim 12,
wherein, when an intra prediction mode of a preconfigured location within the reference block of the current block and an intra prediction mode of the neighboring block of the reference block do not exist, the intra prediction mode is derived based on decoder side intra mode derivation (DIMD).

17. A computer-readable non-transitory storage medium that is configured to store a bitstream,

wherein the bitstream is decoded by a decoding method,
wherein the decoding method comprises:

determining a transform kernel set for transformation of a current block to which intra template matching is applied; and
predicting the current block based on a transform kernel included in the transform kernel set, and
wherein the transform kernel set is determined based on an intra prediction mode related to the current block.

18. The non-transitory storage medium of claim 17,
wherein the transform kernel set is at least one of a set of transform matrices of a multiple transform set (MTS), a set of transform matrices of a low frequency non-separable transform (LFNST), and/or a set of transform matrices of a non-separable primary transform.

19. The non-transitory storage medium of claim 17,
wherein the intra prediction mode is derived based on decoder side intra mode derivation (DIMD).

20. The non-transitory storage medium of claim 17,
wherein the intra prediction mode is derived based on an intra prediction mode of a preconfigured location within a reference block of the current block and an intra prediction mode of a neighboring block of the reference block.

[Fig. 1]

100

[Fig. 2]

200

[Fig. 3]

[Fig. 4]

[Fig. 5]

REFERENCE SAMPLE

SAMPLE OF CURRENT UNIT

[Fig. 6]

0: Planar
1: DC

[Fig. 7]

[Fig. 8]

| Transform Type | Basis function $T_i(j)$, $i,j=0, 1,\ldots, N-1$ |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ $$\text{where } \omega_0 = \begin{cases} \sqrt{\frac{2}{N}} & i=0 \\ 1 & i \neq 0 \end{cases}$$ |
| DCT-V | $$T_i(j) = \omega_0 \cdot \omega_1 \cdot \sqrt{\frac{2}{2N-1}} \cdot \cos\left(\frac{2\pi \cdot i \cdot j}{2N-1}\right),$$ $$\text{where } \omega_0 = \begin{cases} \sqrt{\frac{2}{N}} & i=0 \\ 1 & i \neq 0 \end{cases}, \omega_1 = \begin{cases} \sqrt{\frac{2}{N}} & j=0 \\ 1 & j \neq 0 \end{cases}$$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |
| DST-I | $$T_i(j) = \sqrt{\frac{2}{N+1}} \cdot \sin\left(\frac{\pi \cdot (i+1) \cdot (j+1)}{N+1}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |
| DST-IV | $$T_i(j) = \frac{2}{\sqrt{2N}} \cdot \sin\left(\frac{\pi \cdot (2i+1) \cdot (2j+1)}{4N}\right)$$ |
| IDTR | IDENTITY TRANSFORMATION |

[Fig. 9]

-●-DCT-II  -○-DCT-V  -▲-DCT-VIII  -◆-DST-I  -■-DST-VII

[Fig. 10]

101

```
Transform set based on intra mode and block size[6][36] = {
//0  1  2  3  4  5  6  7  8  9 10 11 12 13 14 15 16 17 18 19 20 21 22 23 24 25 26 27 28 29 30 31 32 33 34 MIP
{ 0, 0, 1, 1, 1, 1, 1, 1, 1, 1, 1, 1, 1, 1, 2, 2, 2, 2, 2, 2, 2, 2, 2, 2, 2, 3, 3, 3, 3, 3, 3, 3, 3, 3, 3, 4 }  //4x4
{ 5, 5, 6, 6, 6, 6, 6, 6, 6, 6, 6, 6, 6, 6, 7, 7, 7, 7, 7, 7, 7, 7, 7, 7, 7, 8, 8, 8, 8, 8, 8, 8, 8, 8, 8, 9 }  //4x8
{10,10,11,11,11,11,11,11,11,11,11,11,11,11,12,12,12,12,12,12,12,12,12,12,12,13,13,13,13,13,13,13,13,13,13,14 }  //4x16
{15,15,16,16,16,16,16,16,16,16,16,16,16,16,17,17,17,17,17,17,17,17,17,17,17,18,18,18,18,18,18,18,18,18,18,19 }  //4x32
{20,20,21,21,21,21,21,21,21,21,21,21,21,22,22,22,22,22,22,22,22,22,22,22,23,23,23,23,23,23,23,23,23,23,23,24 }  //8x4
{25,25,26,26,26,26,26,26,26,26,26,26,26,27,27,27,27,27,27,27,27,27,27,27,28,28,28,28,28,28,28,28,28,28,28,29 }  //8x8
{30,30,31,31,31,31,31,31,31,31,31,31,31,32,32,32,32,32,32,32,32,32,32,32,33,33,33,33,33,33,33,33,33,33,33,34 }  //8x16
{35,35,36,36,36,36,36,36,36,36,36,36,36,37,37,37,37,37,37,37,37,37,37,37,38,38,38,38,38,38,38,38,38,38,38,39 }  //8x32
{40,40,41,41,41,41,41,41,41,41,41,41,41,42,42,42,42,42,42,42,42,42,42,42,43,43,43,43,43,43,43,43,43,43,43,44 }  //16x4
{45,45,46,46,46,46,46,46,46,46,46,46,46,47,47,47,47,47,47,47,47,47,47,47,48,48,48,48,48,48,48,48,48,48,48,49 }  //16x8
{50,50,51,51,51,51,51,51,51,51,51,51,51,52,52,52,52,52,52,52,52,52,52,52,53,53,53,53,53,53,53,53,53,53,53,54 }  //16x16
{55,55,56,56,56,56,56,56,56,56,56,56,56,57,57,57,57,57,57,57,57,57,57,57,58,58,58,58,58,58,58,58,58,58,58,59 }  //16x32
{60,60,61,61,61,61,61,61,61,61,61,61,61,62,62,62,62,62,62,62,62,62,62,62,63,63,63,63,63,63,63,63,63,63,63,64 }  //32x4
{65,65,66,66,66,66,66,66,66,66,66,66,66,67,67,67,67,67,67,67,67,67,67,67,68,68,68,68,68,68,68,68,68,68,68,69 }  //32x8
{70,70,71,71,71,71,71,71,71,71,71,71,71,72,72,72,72,72,72,72,72,72,72,72,73,73,73,73,73,73,73,73,73,73,73,74 }  //32x16
{75,75,76,76,76,76,76,76,76,76,76,76,76,77,77,77,77,77,77,77,77,77,77,77,78,78,78,78,78,78,78,78,78,78,78,79 }  //32x32
};
```

102

[Fig. 11]

```
const uint8_t g_aucTrSet[80][6] =
{
  //T0:0,  1,  2,  3,  4,  5,
  { 18, 24, 17, 23,  8, 12},
  //T1:0,  1,  2,  3,  4,  5,
  { 18,  3,  7, 22,  0, 16},
  //T2:0,  1,  2,  3,  4,  5,
  { 18,  2, 17, 22,  3, 23},
  //T3:0,  1,  2,  3,  4,  5,
  { 18,  3, 15, 17, 12, 23},
  //T4:0,  1,  2,  3,  4,  5,
  { 18, 12,  3, 19, 10, 13},
  //T5:0,  1,  2,  3,  4,  5,
  { 18, 12, 19, 23, 13, 24},
  //T6:0,  1,  2,  3,  4,  5,
  { 18, 12, 17,  2,  3, 23},
  //T7:0,  1,  2,  3,  4,  5,
  { 18,  2, 17, 22, 12, 23},
  //T8:0,  1,  2,  3,  4,  5,
  { 18,  2, 11, 17, 22, 23},
  //T9:0,  1,  2,  3,  4,  5,
  { 18, 12, 19, 23,  3, 10},
  //T10:0, 1,  2,  3,  4,  5,
  { 16, 12, 13, 24,  7,  8},
  //T11:0, 1,  2,  3,  4,  5,
  { 16,  2, 11, 23, 12, 18},
  //T12:0, 1,  2,  3,  4,  5,
  { 13, 17,  2, 22, 12, 18},
  //T13:0, 1,  2,  3,  4,  5,
  { 17, 11,  2, 21, 12, 18},
  //T14:0, 1,  2,  3,  4,  5,
  { 16, 13, 19, 22,  3, 10},
  //T15:0, 1,  2,  3,  4,  5,
  { 18, 12, 13,  7, 14, 22},
  //T16:0, 1,  2,  3,  4,  5,
  { 16, 12, 11,  1, 18, 22},
  //T17:0, 1,  2,  3,  4,  5,
  { 17, 13,  3, 22, 12, 18},
  //T18:0, 1,  2,  3,  4,  5,
  {  6, 12,  1, 22, 13, 17},
  //T19:0, 1,  2,  3,  4,  5,
  { 16, 12, 13, 15,  2, 23},
  //T20:0, 1,  2,  3,  4,  5,
  { 18, 24, 23, 19, 12, 17},
  //T21:0, 1,  2,  3,  4,  5,
  { 18, 24,  2, 17,  0, 23},
  //T22:0, 1,  2,  3,  4,  5,
  { 17,  3,  4, 22,  2, 13},
```

(a)

Transform kernel set [80][6] =

{

//T0:0,  1,  2,  3,  4,  5,

 { 18, 24, 17, 23, 8, 12},

...

First reference value    Second reference value

(b)

[Fig. 12]

[Fig. 13]

A. The ROI
for LFNST4

B. The ROI
for LFNST8

C. The ROI
for LFNST16

[Fig. 14]

Forward LFNST

Inverse LFNST

[Fig. 15]

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 |  |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 |  |

[Fig. 16]

Neighboring sample → Histogram analysis → Prediction mode analysis → Weighted prediction → Prediction block

[Fig. 17]

(a)

(b)

(c)

(d)

(e)

(f)

[Fig. 18]

(Gx > 0 && Gy > 0) ||          (Gx > 0 && Gy < 0) ||
(Gx < 0 && Gy < 0)             (Gx < 0 && Gy > 0)

2                3

(Gx > 0
&& Gy > 0)                $|Gx| < |Gy|$
||
(Gx < 0
&& Gy < 0)              1

$|Gx| > |Gy|$

(Gx < 0
&& Gy > 0)
||
(Gx > 0
&& Gy < 0)             0

[Fig. 19]

G value

modeA

modeB

... 

Intra prediction mode

[Fig. 20]

# Input: ( $bdry_{top}$ , $bdry_{left}$ )    Output: pred

[Fig. 21]

[Fig. 22]

[Fig. 23]

[Fig. 24]

[Fig. 25]

[Fig. 26]

- Input NxN block (N=4 or 8):

$$X = \begin{bmatrix} X_{11} & X_{12} & X_{13} & X_{14} \\ X_{21} & X_{22} & X_{23} & X_{24} \\ X_{31} & X_{32} & X_{33} & X_{34} \\ X_{41} & X_{42} & X_{43} & X_{44} \end{bmatrix}$$

- Representation of $X$ as a vector: based on IPM

If IPM<=34, $x = [x_1, x_2, \ldots, x_K]^T = [X_{11}, X_{12}, X_{13}, X_{14}, X_{21}, X_{22}, X_{23}, X_{24}, X_{31}, X_{32}, X_{33}, X_{34}, X_{41}, X_{42}, X_{43}, X_{44}]^T$

Otherwise, $x = [x_1, x_2, \ldots, x_K]^T = [X_{11}, X_{21}, X_{31}, X_{41}, X_{12}, X_{22}, X_{32}, X_{42}, X_{13}, X_{23}, X_{33}, X_{43}, X_{14}, X_{24}, X_{34}, X_{44}]^T$

[Fig. 27]

(a)

(b)

(c)

[Fig. 28]

Current block(CU/PU)

[Fig. 29]

(a)

(b)

[Fig. 30]

```
인트라모드와블록크기기반변환세트[16][37] = {
  //0   1   2   ···,33 34 MIP IntraTMP
  { 0, 0, 1, ···,3, 3, 4 ,    A    }, //4x4
  { 5, 5, 6, ···,8, 8, 9 ,    B    }, //4x8
  {10,10,11, ···,13,13,14 ,   C    }, //4x16
  {15,15,16, ···,18,18,19 ,   D    }, //4x32
  {20,20,21, ···,23,23,24 ,   E    }, //8x4
  {25,25,26, ···,28,28,29 ,   F    }, //8x8
  {30,30,31, ···,33,33,34 ,   G    }, //8x16
  {35,35,36, ···,38,38,39 ,   H    }, //8x32
  {40,40,41, ···,43,43,44 ,   I    }, //16x4
  {45,45,46, ···,48,48,49 ,   J    }, //16x8
  {50,50,51, ···,53,53,54 ,   K    }, //16x16
  {55,55,56, ···,58,58,59 ,   L    }, //16x32
  {60,60,61, ···,63,63,64 ,   M    }, //32x4
  {65,65,66, ···, 68,68,69 ,  N    }, //32x8
  {70,70,71, ···, 73,73,74 ,  O    }, //32x16
  {75,75,76, ···,78,78,79 ,   P    }, //32x32
};
```

(a)

```
const uint8_t g_aucTrSet[96][6] =
{
...
//TA
{18, 12, },
...
//TB
{0,1,2,},
...
//TC
{0, 1, 2, 3, 4, 5},
...

}
```

(b)

[Fig. 31]

| coding_unit( x0, y0, cbWidth, cbHeight, cqtDepth, treeType, modeType ) { | Descriptor |
|---|---|
| ... | |
| pred_mode_flag | ae(v) |
| ... | |
| if ( sps_dimd_enable_flag ) | |
| cu_dimd_flag | ae(v) |
| if(sps_bdpcm_enabled_flag &&    cbWidth <= MaxTsSize && cbHeight <= MaxTsSize && !cu_dimd_flag ) | |
| Intra_bdpcm_luma_flag | ae(v) |
| if( intra_bdpcm_luma_flag ) | |
| intra_bdpcm_luma_dir_flag | ae(v) |
| if( sps_tmp_enable_flag && cbWidth <= TMP_MaxSize && cbHeight <= TMP_MaxSize && !cu_dimd_flag && !Intra_bdpcm_luma_flag ) | |
| intra_tmp_flag | ae(v) |
| if ( !intra_tmp_flag && !cu_dimd_flag && ! Intra_bdpcm_luma_flag) { | |
| if( sps_mip_enabled_flag ) | |
| intra_mip_flag | ae(v) |
| if( intra_mip_flag ) { | |
| intra_mip_transposed_flag[ x0 ][ y0 ] | ae(v) |
| intra_mip_mode[ x0 ][ y0 ] | ae(v) |
| } else { | |
| if ( sps_timd_enable_flag && (sh_slice_type != I || (sh_slice_type == I && cbWidth * cbHeight <=1024 ))) | |
| intra_timd_flag | ae(v) |
| if( sps_mrl_enabled_flag && (( y0 % CtbSizeY ) > 0 ) ) | |
| intra_luma_ref_idx | ae(v) |
| ... | |
| } //intra_mip_flag or not | |
| } | |
| } | |

[Fig. 32]

| coding_unit( x0, y0, cbWidth, cbHeight, cqtDepth, treeType, modeType ) { | Descriptor |
|---|---|
| ... | |
|    pred_mode_flag | ae(v) |
|    ... | |
|      if (sps_timd_enable_flag && (sh_slice_type != I \|\| (sh_slice_type == I && cbWidth * cbHeight <=1024 ))) | |
|       cu_timd_flag | ae(v) |
|      if(sps_bdpcm_enabled_flag && cbWidth <= MaxTsSize && cbHeight <= MaxTsSize && !cu_timd_flag ) | |
|       Intra_bdpcm_luma_flag | ae(v) |
|      if( intra_bdpcm_luma_flag ) | |
|       intra_bdpcm_luma_dir_flag | ae(v) |
|      if( sps_tmp_enable_flag && cbWidth <= TMP_MaxSize && cbHeight <= TMP_MaxSize && !cu_timd_flag && !Intra_bdpcm_luma_flag ) | |
|       intra_tmp_flag | ae(v) |
|      if ( !intra_tmp_flag && !cu_timd_flag && ! Intra_bdpcm_luma_flag) { | |
|       if( sps_mip_enabled_flag ) | |
|        intra_mip_flag | ae(v) |
|       if( intra_mip_flag ) { | |
|        intra_mip_transposed_flag[ x0 ][ y0 ] | ae(v) |
|        intra_mip_mode[ x0 ][ y0 ] | ae(v) |
|       } else { | |
|        if (sps_dimd_enable_flag) | |
|        intra_dimd_flag | ae(v) |
|        if( sps_mrl_enabled_flag && (( y0 % CtbSizeY ) > 0 ) && !intra_dimd_flag) | |
|        intra_luma_ref_idx | ae(v) |
|       ... | |
|       } //intra_mip_flag or not | |
|      } | |
|  } | |

[Fig. 33]

| coding_unit( x0, y0, cbWidth, cbHeight, cqtDepth, treeType, modeType ) { | Descriptor |
|---|---|
| ... | |
| LfnstDcOnly = 1 | |
| LfnstZeroOutSigCoeffFlag = 1 | |
| MtsDcOnly = 1 | |
| MtsZeroOutSigCoeffFlag = 1 | |
| transform_tree( x0, y0, cbWidth, cbHeight, treeType, chType ) | |
| lfnstWidth = ( treeType = = DUAL_TREE_CHROMA ) ? cbWidth / SubWidthC : <br> ( ( IntraSubPartitionsSplitType = = ISP_VER_SPLIT ) ? <br> cbWidth / NumIntraSubPartitions : cbWidth ) | |
| lfnstHeight = ( treeType = = DUAL_TREE_CHROMA ) ? cbHeight / SubHeightC : <br> ( ( IntraSubPartitionsSplitType = = ISP_HOR_SPLIT ) ? <br> cbHeight / NumIntraSubPartitions : cbHeight ) | |
| lfnstNotTsFlag = ( treeType = = DUAL_TREE_CHROMA || <br> !tu_y_coded_flag[ x0 ][ y0 ] || <br> transform_skip_flag[ x0 ][ y0 ][ 0 ] = = 0 ) && <br> ( treeType = = DUAL_TREE_LUMA || <br> ( ( !tu_cb_coded_flag[ x0 ][ y0 ] || <br> transform_skip_flag[ x0 ][ y0 ][ 1 ] = = 0 ) && <br> ( !tu_cr_coded_flag[ x0 ][ y0 ] || <br> transform_skip_flag[ x0 ][ y0 ][ 2 ] = = 0 ) ) ) | |
| if( Min( lfnstWidth, lfnstHeight ) >= 4 && sps_lfnst_enabled_flag = = 1 && <br> CuPredMode[ chType ][ x0 ][ y0 ] = = MODE_INTRA && lfnstNotTsFlag = = 1 && <br> ( treeType = = DUAL_TREE_CHROMA || !IntraMipFlag[ x0 ][ y0 ] <br> || !IntraTmpFlag[x0][y0] || Min( lfnstWidth, lfnstHeight ) >= 16 ) && <br> Max( cbWidth, cbHeight ) <= MaxTbSizeY ) { | |
| if( ( IntraSubPartitionsSplitType != ISP_NO_SPLIT || LfnstDcOnly = = 0 ) && <br> LfnstZeroOutSigCoeffFlag = = 1 ) | |
| lfnst_idx | ae(v) |
| } | |
| if( treeType != DUAL_TREE_CHROMA && lfnst_idx = = 0 && <br> transform_skip_flag[ x0 ][ y0 ][ 0 ] = = 0 && Max( cbWidth, cbHeight ) <= 32 && <br> IntraSubPartitionsSplitType = = ISP_NO_SPLIT && cu_sbt_flag = = 0 && <br> MtsZeroOutSigCoeffFlag = = 1 && MtsDcOnly = = 0 ) { | |
| if( ( ( CuPredMode[ chType ][ x0 ][ y0 ] = = MODE_INTER && <br> sps_explicit_mts_inter_enabled_flag ) || <br> ( CuPredMode[ chType ][ x0 ][ y0 ] = = MODE_INTRA && <br> sps_explicit_mts_intra_enabled_flag ) ) ) | |
| mts_idx | ae(v) |
| } | |
| } | |
| } | |

3301

[Fig. 34]

intra prediction mode(IPM) map

Template matching block

4

4

Current CU/PU

16

16

[Fig. 35]

[Fig. 36]

EP 4 589 945 A1

[Fig. 37]

| coding_unit( x0, y0, cbWidth, cbHeight, cqtDepth, treeType, modeType ) { | Descri ptor |
|---|---|
| . . . | |
| pred_mode_flag | ae(v) |
| . . . | |
| if ( sps_dimd_enable_flag ) | |
| cu_dimd_flag | ae(v) |
| if(sps_bdpcm_enabled_flag && cbWidth <= MaxTsSize && cbHeight <= MaxTsSize && !cu_dimd_flag ) | |
| Intra_bdpcm_luma_flag | ae(v) |
| if( intra_bdpcm_luma_flag ) | |
| intra_bdpcm_luma_dir_flag | ae(v) |
| if( sps_tmp_enable_flag &&!cu_dimd_flag && !Intra_bdpcm_luma_flag && ((sh_slice_type !=I && cbWidth <= TMP_MaxSize && cbHeight <= TMP_MaxSize) \|\| (sh_slice_type= =I && cbWidth<=TMPSize && cbHeight<=TMPize))) | |
| intra_tmp_flag | ae(v) |
| if ( !intra_tmp_flag && !cu_dimd_flag && ! Intra_bdpcm_luma_flag) { | |
| if( sps_mip_enabled_flag ) | |
| intra_mip_flag | ae(v) |
| if( intra_mip_flag ) { | |
| intra_mip_transposed_flag[ x0 ][ y0 ] | ae(v) |
| intra_mip_mode[ x0 ][ y0 ] | ae(v) |
| } else { | |
| if ( sps_timd_enable_flag && (sh_slice_type != I \|\| (sh_slice_type == I && cbWidth * cbHeight <=1024 ))) | |
| intra_timd_flag | ae(v) |
| if( sps_mrl_enabled_flag && (( y0 % CtbSizeY ) > 0 ) && !intra_timd_flag) | |
| intra_luma_ref_idx | ae(v) |
| . . . | |
| } //intra_mip_flag or not | |
| } | |
| } | |

58

[Fig. 38]

```
trTypeHor = DCT2;
trTypeVer = DCT2;

bool widthDstOk  = width >=4 && width <=16;
bool heightDstOk = height >= 4 && height <= 16;

if (widthDstOk)
             {      trTypeHor = DST7;    }
if (heightDstOk)
             {      trTypeVer = DST7;    }
```

[Fig. 39]

[Fig. 40]

(a)

(b)

(c)

[Fig. 41]

Determine transform kernel set for transform of current block to which intra template matching is applied — S4110

Predict current block based on transform kernel included in transform kernel set — S4120

## INTERNATIONAL SEARCH REPORT

| International application No. |
|---|
| **PCT/KR2023/014063** |

### A. CLASSIFICATION OF SUBJECT MATTER

**H04N 19/105**(2014.01)i; **H04N 19/593**(2014.01)i; **H04N 19/11**(2014.01)i; **H04N 19/176**(2014.01)i; **H04N 19/70**(2014.01)i; **H04N 19/61**(2014.01)i; **H04N 19/167**(2014.01)i; **H04N 19/625**(2014.01)i; **H04N 19/119**(2014.01)i; **H04N 19/96**(2014.01)i

According to International Patent Classification (IPC) or to both national classification and IPC

### B. FIELDS SEARCHED

Minimum documentation searched (classification system followed by classification symbols)

H04N 19/105(2014.01); H04N 19/159(2014.01); H04N 19/172(2014.01); H04N 7/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 템플릿 매칭(TM: Template Matching), 인트라 예측(intra prediction), DIMD(Decoder side intra mode derivation), 변환 커널(transform kernel)

### C. DOCUMENTS CONSIDERED TO BE RELEVANT

| Category* | Citation of document, with indication, where appropriate, of the relevant passages | Relevant to claim No. |
|---|---|---|
| Y | US 11284086 B2 (HUAWEI TECHNOLOGIES CO., LTD.) 22 March 2022 (2022-03-22)<br>See column 2, line 66 - column 3, line 2; column 10, lines 25-48 and column 11, lines 17-26; claim 1; and figures 4 and 6. | 1-20 |
| Y | BROWNE, Adrian et al. Algorithm description for Versatile Video Coding and Test Model 17 (VTM17). Joint Video Experts Team (JVET) of ITU-T SG 16 WP 3 and ISO/IEC JTC 1/SC 29, 26th Meeting, by teleconference, [Document: JVET-Z2002-v2 (Version 2)]. pp. 1-130, 14 July 2022.<br>[Retrieved on 14 November 2023]. Retrieved from <https://jvet-experts.org>.<br>See page 63. | 1-20 |
| A | US 2012-0044996 A1 (SATO, Kazushi) 23 February 2012 (2012-02-23)<br>See claims 1-17; and figures 1-40. | 1-20 |
| A | WO 2011-071514 A2 (THOMSON LICENSING) 16 June 2011 (2011-06-16)<br>See claims 1-22; and figures 1-14. | 1-20 |

☑ Further documents are listed in the continuation of Box C.   ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 January 2024** | **08 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/014063** |

### C. DOCUMENTS CONSIDERED TO BE RELEVANT

| Category* | Citation of document, with indication, where appropriate, of the relevant passages | Relevant to claim No. |
| --- | --- | --- |
| PX | COBAN, Muhammed et al. Algorithm description of Enhanced Compression Model 6 (ECM 6). Joint Video Experts Team (JVET) of ITU-T SG 16 WP 3 and ISO/IEC JTC 1/SC 29, 27th Meeting, by teleconference, [Document: JVET-AA2025 (Version 1)]. pp. 1-53, 11 October 2022.<br>[Retrieved on 14 November 2023]. Retrieved from <https://jvet-experts.org>.<br>See pages 5-8, 13, 30 and 39; and figures 2-4. | 1-20 |

Form PCT/ISA/210 (second sheet) (July 2022)

## INTERNATIONAL SEARCH REPORT
### Information on patent family members

International application No.

**PCT/KR2023/014063**

| Patent document cited in search report | | | Publication date (day/month/year) | Patent family member(s) | | | Publication date (day/month/year) |
|---|---|---|---|---|---|---|---|
| US | 11284086 | B2 | 22 March 2022 | EP | 3643062 | A1 | 29 April 2020 |
| | | | | US | 2020-0145668 | A1 | 07 May 2020 |
| | | | | WO | 2019-007490 | A1 | 10 January 2019 |
| US | 2012-0044996 | A1 | 23 February 2012 | BR | PI1008507 | A2 | 16 April 2019 |
| | | | | CN | 102318346 | A | 11 January 2012 |
| | | | | RU | 2011134049 | A | 20 February 2013 |
| | | | | TW | 201032600 | A | 01 September 2010 |
| | | | | WO | 2010-095560 | A1 | 26 August 2010 |
| WO | 2011-071514 | A2 | 16 June 2011 | CN | 102742268 | A | 17 October 2012 |
| | | | | CN | 102742268 | B | 04 May 2016 |
| | | | | CN | 105791823 | A | 20 July 2016 |
| | | | | CN | 105791823 | B | 29 November 2019 |
| | | | | EP | 2510697 | A2 | 17 October 2012 |
| | | | | EP | 2510697 | B1 | 23 August 2017 |
| | | | | EP | 2621174 | A2 | 31 July 2013 |
| | | | | EP | 2621174 | A3 | 26 February 2014 |
| | | | | EP | 2640075 | A2 | 18 September 2013 |
| | | | | EP | 2640075 | A3 | 26 February 2014 |
| | | | | JP | 2013-513333 | A | 18 April 2013 |
| | | | | JP | 5869493 | B2 | 24 February 2016 |
| | | | | KR | 10-1839629 | B1 | 16 March 2018 |
| | | | | KR | 10-2012-0126067 | A | 20 November 2012 |
| | | | | US | 10743027 | B2 | 11 August 2020 |
| | | | | US | 2012-0281752 | A1 | 08 November 2012 |
| | | | | WO | 2011-071514 | A3 | 25 August 2011 |

Form PCT/ISA/210 (patent family annex) (July 2022)